# EUROPEAN PATENT SPECIFICATION

(11) **EP 2 639 698 B1**
(45) Date of publication and mention of the grant of the patent: **08.10.2014**
(21) Application number: 13157962.5
(22) Date of filing: 06.03.2013
(51) Int. Cl.: G06F 11/14

(54) **Backup control program, backup control method, and information processing device**
Backup-Steuerprogramm, Backup-Steuerverfarhen und Informationsverarbeitungsvorrichtung
Programme et procédé de commande de sauvegarde et dispositif de traitement d'informations

(30) Priority: 14.03.2012 JP 2012057857
(43) Date of publication of application: 18.09.2013
(73) Proprietor: FUJITSU LIMITED, Kawasaki-shi, Kanagawa 211-8588 (JP)
(72) Inventor: Kawamoto, Atsushi, Kanagawa, 211-8588 (JP)
(74) Representative: HOFFMANN EITLE

(56) References cited:
- US-A1- 2009 144 389
- US-A1- 2010 299 309

## Description

### FIELD

The embodiments discussed herein relate to a technique for backing up data.

### BACKGROUND

Recently, various virtualization techniques have been studied. According to a certain type of the virtualization techniques, physical resources can be shared among a plurality of platforms.

For example, according to Japanese National Publication of International Patent Application No. 2007-526527, a method as described below for sharing resources among a plurality of computing platforms has been proposed. The method can be used in order to support shared disk storage.

According to this method, firmware provided in each platform is loaded so as to be available upon execution of an OS (Operating System). Shared resources are depicted as local resources with respect to the OS operated in the platform. In practice, the shared resources are normally hosted by the other platform(s).

An operating resource access request is received by a requesting platform and is transmitted to the other platform which actually hosts a target resource used for providing a service to the resource access request. A global resource map is used in order to determine an appropriate host platform.

Communication among the platforms is enabled via an OOB (Out-Of-Band) communication channel or network. In order to realize route change of data via the OOB channel, a hidden execution mode is executed. As a result, the method is transparently executed with respect to the OS that operates in the platform.

A certain type of the virtualization technique facilitates migration among servers. Various studies have been carried out for live migration among servers.

For example, there may be a case in which virtual servers are deployed in mutually different SAN (Storage Area Network) environments and such deployment prevents a volume of a storage device from being shared among the virtual servers. In order to enable live migration of virtual servers even in such a case, a virtual computer system as described below has been proposed by Japanese Laid-Open Patent Publication No. 2009-140053 and its counterpart, US Patent Application Publication No. 2009/144389A.

Each of a migration-source virtual server and a migration-destination virtual server has a volume allocation unit, a volume information control unit, an identification unit, and a virtual OS migration unit. The volume allocation unit allocates logical volumes controlled by a control OS and logical volumes controlled by virtual OSs. The volume information control unit associates volume identification information for identifying the logical volumes with the logical volumes controlled by the control OSs to control them. Based on volume identification information, the identification unit enables the migration-source virtual server and the migration-destination virtual server to identify the same logical volume as a target logical volume.

The virtual OS migration unit migrates the data in a memory region, which is used by the virtual OS of the migration-source virtual server, to the migration-destination virtual server.

The virtual OS migration unit further migrates update data in a memory region, which is updated during migration, to the migration-destination virtual server.

Meanwhile, a backup management method has been proposed by US Patent Application Publication No. 2010/0299309A. According to the backup management method, restoration of all virtual machines are managed in respect of each restoration time thereof in a case where virtual machines at certain time in the past are restored under a server virtualization environment in which a plurality of virtual machines are constituted. A host computer creates a first snapshot of a first virtual machine at a first time specified by a management computer, and stores the first snapshot in a first logical volume of a storage device. Next, the storage system replicates in a second logical volume the first logical volume. In a case where the host computer creates a second snapshot of a second virtual machine at a second time that is before the first time and stores the second snapshot in the first logical volume, the management computer manages or displays the second snapshot creation time and snapshot information in association with the first snapshot creation time and snapshot information, respectively.

As exemplified above, various virtualization techniques have been studied and proposed. However, among the techniques developed for non-virtualized environments, some of the techniques are not applicable to virtual environments when they are provided on an "as-is" basis. There is still room for study for causing the techniques, which have been developed for non-virtualized environments, to be available also in virtual environments.

### SUMMARY

### TECHNICAL PROBLEM

A storage system including a storage medium and a control device receives a backup instruction for backing up data from a first storage region to a second storage region, from a computer in accordance with some sort of a protocol. Then, the storage system backs up the data in accordance with the received backup instruction. Depending on the protocol, only the information for physically identifying the first and second storage regions is allowed to be used as the information for specifying the first and second storage regions.

Meanwhile, the information for physically identifying the first storage region is not always available. For example, in a certain environment on a physical computer, instead of the information for physically identifying the first storage region, information for virtually identifying, in the certain environment, the first storage region may be used. Then, a data utilization program which utilizes data of the first storage region may be executed in such an environment.

In this case, the backup instruction may be issued not from a process of the data utilization program in the above described environment, but from a process of a different program executed in a different environment in which the information for physically identifying the first and second storage regions is recognizable. However, if a backup instruction is arbitrarily issued independently of operation by the data utilization program, data may be updated during execution of a backup process, and consistency of the data may fail to be maintained as a result.

Therefore, in order to maintain consistency of the data, issuing of the backup instruction may be accompanied by a process for restricting or monitoring access to the first storage region carried out in accordance with the data utilization program.

However, the data utilization program is not always provided with an interface for receiving the restriction or monitoring as described above from outside of the environment in which the data utilization program is executed. That is, backup of data in accordance with the backup instruction is not unconditionally feasible. Depending on the environment in which the data utilization program is executed or the interface of the data utilization program, there is a possibility that maintaining consistency of data may be incompatible with backing up the data by utilizing the backup instruction.

Accordingly, it is an object in one aspect of the embodiments to relax the conditions under which backup of data in accordance with a predetermined instruction is feasible.

### SOLUTION TO PROBLEM

In accordance with the present invention, which is defined in detail in the appended independent claims 1, 7 and 8, it is provided a backup control program, a backup control method and an information processing device for causing a computer to execute a backup control process.

The backup control process includes issuing a stop instruction in accordance with a first program module included in the backup control program and executed in a first environment on the computer, the stop instruction being for causing a process of a data utilization program operating on the first environment and utilizing a first storage region storing data targeted for backup to temporarily stop an updating operation with respect to the first storage region.

The backup control process includes notifying first virtual identification information and second virtual identification information to a process of a second program module in accordance with the first program module, the second program module being included in the backup control program and executed in a second environment which is an environment on the computer and from which each of at least one real storage device is recognizable, the first virtual identification information being for identifying, in at least one virtual storage device recognized in the first environment, the first storage region, the second virtual identification information being for identifying, in the at least one virtual storage device, a second storage region to which the data is to be backed up.

The backup control process includes acquiring first real identification information in accordance with the second program module by using a correspondence relation between the at least one real storage device and the at least one virtual storage device and using the notified first virtual identification information, the first real identification information being for identifying, in the at least one real storage device, the first storage region.

The backup control process includes acquiring second real identification information in accordance with the second program module by using the correspondence relation and the notified second virtual identification information, the second real identification information being for identifying, in the at least one real storage device, the second storage region.

The backup control process includes, based on the acquired first real identification information and the acquired second real identification information, issuing a backup instruction in accordance with the second program module, the backup instruction being for backing up the data from the first storage region to the second storage region.

### ADVANTAGEOUS EFFECTS OF INVENTION

According to the above described backup control program, the conditions under which backup of data in accordance with a predetermined instruction such as a backup instruction is feasible are relaxed.

### BRIEF DESCRIPTION OF DRAWINGS

FIG. 1 is a block diagram of a first embodiment;
FIG. 2 is a sequence diagram of backup control in the first embodiment;
FIG. 3 is a drawing explaining a first comparative example;
FIG. 4 is a drawing explaining a second comparative example;
FIG. 5 is a block diagram of a second embodiment;
FIG. 6 is a hardware configuration diagram of a system;
FIG. 7 is a flow chart of a backup control process;
FIG. 8 is a drawing giving examples of values used in processing;
FIG. 9 is a drawing explaining examples of virtual partitions, virtual disks, real partitions, and real disks;
FIG. 10 is a flow chart of a process of acquiring physical region information;
FIG. 11 is a flow chart of a process of acquiring region information of a device; and
FIG. 12 is a flow chart of a process of ordering a storage system to carry out copy of data.

### DESCRIPTION OF EMBODIMENTS

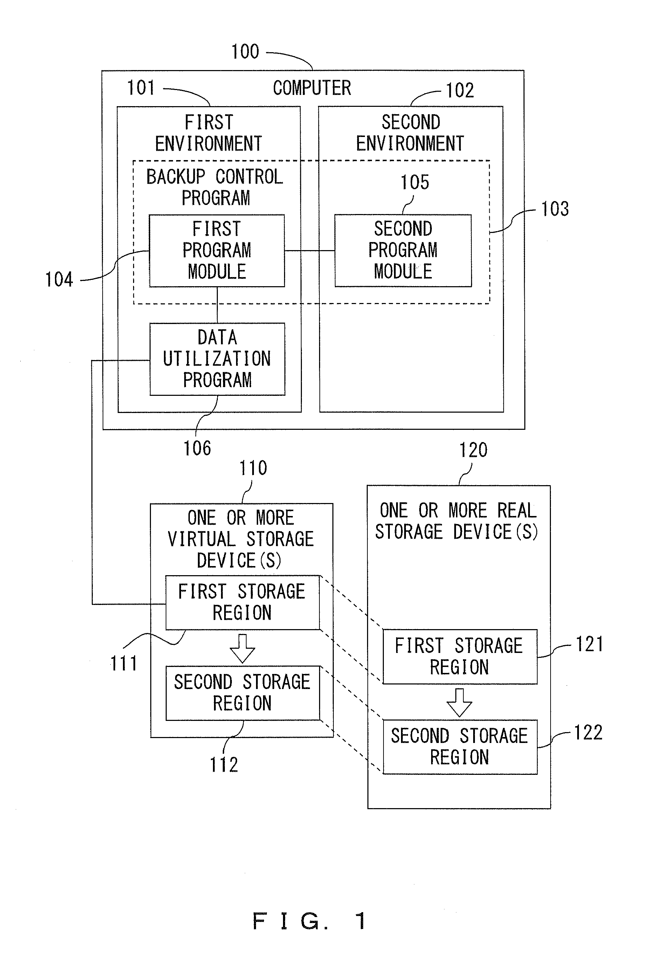

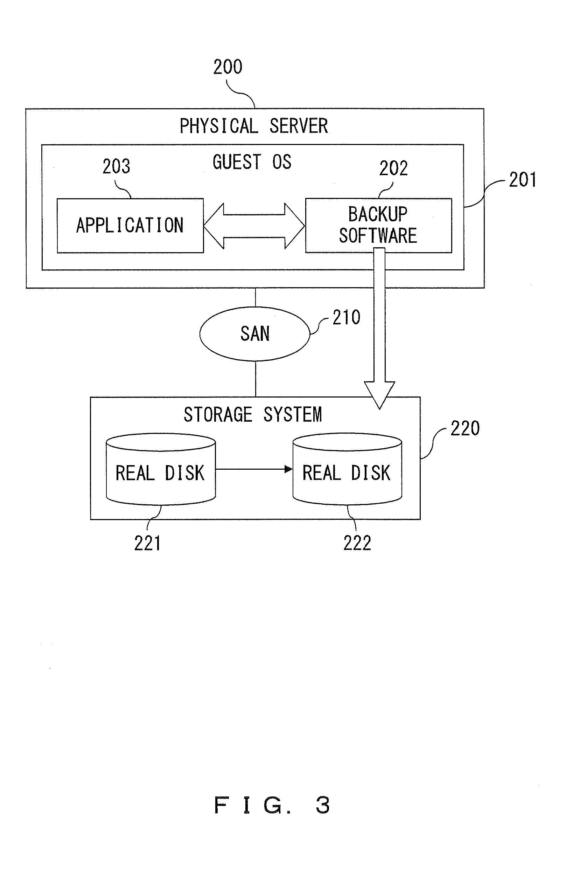

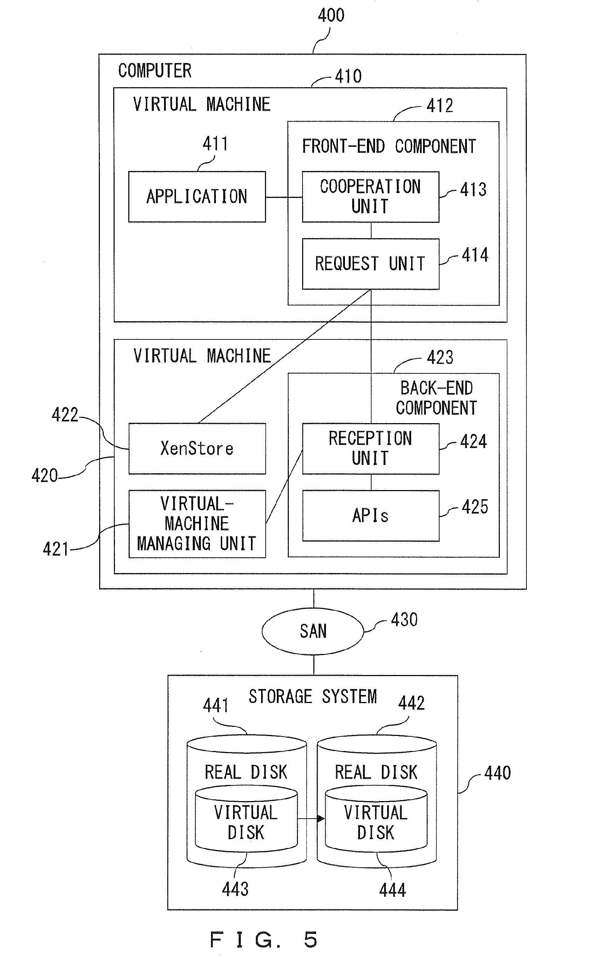

Hereinafter, embodiments will be explained in detail with reference to drawings. Specifically, first, the first embodiment will be explained with reference to FIGS. 1 to 2. Next, first to second comparative examples will be explained with reference to FIGS. 3 to 4. Then, the second embodiment will be explained with reference to FIGS. 5 to 12. In the end, other modification examples will be also explained.

FIG. 1 is a block diagram of the first embodiment. FIG. 1 illustrates a computer 100, a virtual storage device 110, and a real storage device 120.

The virtual storage device 110 is depicted by one block in FIG. 1. However, the number of the virtual storage device(s) 110 may be one or may be two or more. Similarly, the real storage device 120 is depicted by one block in FIG. 1; however, the number of the real storage device(s) 120 may be one or may be two or more.

For example, each real storage device 120 may be a real disk. In that case, each virtual storage device 110 is a virtual disk.

Each real storage device 120 may be a disk of a normal HDD (Hard Disk Drive) connected as a DAS (Direct Attached Storage) to the computer 100. Alternatively, each real storage device 120 may be one logical unit recognized from outside as one real disk drive in a RAID (abbreviation of Redundant Array of Independent Disks or Redundant Array of Inexpensive Disks) system.

The RAID system may be connected to the computer 100, for example, via a network such as a SAN. One entire RAID system including a RAID controller and a plurality of magnetic disk media may be provided as one device housed in one chassis.

If the RAID system is used, the RAID level thereof is arbitrary. For example, levels such as RAID 0, RAID 1, RAID 5, RAID 0+1, RAID 1+0, RAID 0+5, and RAID 5+0 can be available.

Both of the normal HDD and RAID system as exemplified above include not only a storage medium(media) (for example, magnetic disk medium(media)), but also a control device (for example, a control circuit in a HDD or a RAID controller in a RAID system). The HDD or the RAID system receives instructions from the computer 100 and operates based on control by the control device in accordance with the received instructions.

A first environment 101 and a second environment 102 are built on the computer 100. In the second environment 102, each of the at least one real storage device 120 is recognizable. Specific examples include cases like below (1a) and (1b).
(1a) A case in which the first environment 101 is a first virtual machine which operates (i.e., runs) on a hypervisor, and the second environment 102 is a second virtual machine which operates (i.e., runs) on the hypervisor.
(1b) A case in which the first environment 101 is an environment built on the second environment 102 or in the second environment 102.

In either one of the above described cases (1a) and (1b), in the first environment 101, the at least one real storage device 120 is not required to be recognized, and the at least one virtual storage device 110 may be recognized instead.

Incidentally, access to a storage region (i.e., storage area) included in any of the at least one virtual storage device 110 is physically realized (i.e., implemented) by access to a storage region allocated to any of the real storage devices 120.

For example, physically, a first storage region 121 included in any of the at least one real storage device 120 is used as a first storage region 111 included in any of the at least one virtual storage device 110. Therefore, access to the first storage region 111 on the virtual storage device 110 is physically realized by access to the first storage region 121 on the real storage device 120. In other words, both of the reference numerals "111" and "121" physically indicate the same first storage region.

Similarly, physically, a second storage region 122 included in any of the at least one real storage device 120 is used as a second storage region 112 included in any of the at least one virtual storage device 110. Therefore, access to the second storage region 112 on the virtual storage device 110 is physically realized by access to the second storage region 122 on the real storage device 120. In other words, both of the reference numerals "112" and "122" physically indicate the same second storage region.

For example in the case of (1a), as described above, the first virtual machine is not required to recognize the at least one real storage device 120. In this case, access to the real storage device 120 for realizing the access from the first virtual machine to the virtual storage device 110 may be carried out via a device driver of the second virtual machine.

In the case of (1a), more specifically, the first environment 101 may be, for example, "Domain U" on a Xen hypervisor, and the second environment 102 may be "Domain 0" on a Xen hypervisor (Xen is a registered trademark). Access from Domain U to a storage region on the virtual storage device 110 is physically realized as access to a storage region on the real storage device 120. The access to the storage region on the real storage device 120 is carried out via a device driver of Domain 0.

As a matter of course, the first environment 101 and the second environment 102 may be virtual machines on hypervisors other than those of Xen. Environments provided on the hypervisors are called by various names such as "domains", "logical domains", and "partitions". For example, like the above described case of (1b), the first environment 101 and the second environment 102 may be built in the computer 100 by virtualization techniques other than the hypervisors.

As described above, also in the case of (1b), access from the inside of the first environment 101 to a storage region included in any of the at least one virtual storage device 110 is physically realized by access to the storage region allocated to any of the real storage device (s) 120. In the above described case (1b), the access to the real storage device 120 may be carried out via an OS, which provides the second environment 102.

More specific possible examples of the above described case (1b) include, for example, cases like below (2a) to (2c).
(2a) A case in which the first environment 101 is a virtual machine which operates (i.e., runs) on a host OS, and the second environment 102 is an environment provided by the host OS (in other words, an environment of a layer below the virtual machine). As the techniques that execute the virtual machine on the host OS, for example, products such as VMware Player are known (VMware is a registered trademark).
(2b) A case in which the first environment 101 is a runtime environment included in the second environment 102. For example, a case in which the first environment 101 is a non-global zone of a Solaris container, and the second environment 102 is a global zone of a Solaris container (Solaris is a registered trademark).
(2c) A case in which the second environment 102 is an environment provided by a host OS, and a module for KVM (Kernel-based Virtual Machine) is incorporated in a kernel of the host OS. In this case, the first environment 101 is an environment provided by a guest OS.

As a matter of course, the virtualization techniques for building the first environment 101 and the second environment 102 on the computer 100 are not limited to the above described examples of the virtualization techniques.

In FIG. 1, for the convenience of illustration, the first environment 101 is illustrated in the left of the second environment 102. However, as described above in (1b), the first environment 101 may be built on the second environment 102 or may be built in the second environment 102.

A backup control program 103 of the first embodiment is a program executed by the computer 100 in which the first environment 101 and the second environment 102 are built. The backup control program 103 includes a first program module 104, which is executed in the first environment 101, and a second program module 105, which is executed in the second environment 102. In other words, the first program module 104 is a first control program, which operates (i.e., runs) in the first environment 101, and the second program module 105 is a second control program, which operates (i.e., runs) in the second environment 102.

As depicted in FIG. 1, not only the first program module 104 but also a data utilization program 106 operates (i.e., runs) on the first environment 101. The data utilization program 106 may be, for example, a program of a DBMS (Database Management System).

The data utilization program 106 is a program, which utilizes the first storage region 111 in the virtual storage device 110. As described above, the first storage region 111 is physically the first storage region 121; therefore, data in the first storage region 121 is accessed in accordance with the data utilization program 106.

In this case, it is assumed that a user (for example, an administrator of the computer 100) desires to back up the data stored in the first storage region 111 to the second storage region 112.

As described above, each real storage device 120 may be, for example, a disk. In that case, each virtual storage device 110 is a virtual disk.

The number of the virtual disk(s) may be two or more, in other words, at least first and second virtual storage devices 110 may be present. The first storage region 111 may be one partition on the first virtual storage device 110, and the second storage region 112 may be one partition on the second virtual storage device 110.

One partition on any of the real storage device (s) 120 may be allocated for the first virtual storage device 110. Similarly, one partition on any of the real storage device(s) 120 may be allocated for the second virtual storage device 110.

These two real partitions may be included in the same real disk. However, in order to protect data more safely, these two real partitions are preferably present in mutually different real disks.

That is to say, in order to protect the data more safely, it is preferred that the real disk including the first storage region 121 corresponding to the first storage region 111 and the real disk including the second storage region 122 corresponding to the second storage region 112 are mutually different. The real disk including the first storage region 121 and the real disk including the second storage region 122 may be included in a single identical device (for example, a single RAID system housed in a single chassis) or may be separately present in two devices.

The backup control program 103 is a program for controlling backup of data from the first storage region 111 to the second storage region 112 (in other words, backup of data from the first storage region 121 to the second storage region 122). Specifically, the computer 100 operates in a below manner in accordance with the first program module 104 and the second program module 105.

The computer 100 issues a stop instruction in accordance with the first program module 104. The stop instruction is an instruction for causing a process of data utilization program 106 to temporarily stop an updating operation with respect to the first storage region 111 (in other words, the region in which the backup-target data is stored). The backup-target data is the data targeted for backup, namely, the data to be backed up. The updating operation includes specifically, for example, an operation of adding new data, an operation of deleting existing data, and an operation of rewriting existing data.

In this case, the process of the first program module 104 and the process of the data utilization program 106 are the processes in the same first environment 101. Therefore, issuing and receiving of the stop instruction may be carried out via an interface (for example, API (Application Programming Interface) used in the first environment 101) for inter-process communication in the first environment 101.

The computer 100 further notifies information of below described (3a) and (3b) to the process of the second program module 105 in accordance with the first program module 104.
(3a) First virtual identification information for identifying, in the at least one virtual storage device 110 recognized in the first environment 101, the first storage region 111, which is the storage area from which the data is to be backed up.
(3b) Second virtual identification information for identifying, in the at least one virtual storage device 110 recognized in the first environment 101, the second storage region 112 (in other words, a backup destination of data, namely, the storage area to which the data is to be backed up).

The first virtual identification information may include, for example, information for identifying, among the at least one virtual storage device 110, the virtual storage device 110 including the first storage region 111 and information indicating the position of the first storage region 111 in the virtual storage device 110. Similarly, the second virtual identification information may include information for identifying, among the at least one virtual storage device 110, the virtual storage device 110 including the second storage region 112 and information indicating the position of the second storage region 112 in the virtual storage device 110.

More specifically, the information indicating the position of the storage region in the virtual storage device 110 may include a starting address of the storage region. For example, a combination of a starting address and a size or a combination of a starting address and an ending address may be used as the information indicating the position of the storage region.

The notification of the first virtual identification information and the second virtual identification information is notification over different environments (specifically, notification from the inside of the first environment 101 to the inside of the second environment 102). Therefore, the notification of the first virtual identification information and the second virtual identification information may be carried out in accordance with a network protocol. As the network protocol, for example, TCP/IP (Transmission Control Protocol/Internet Protocol) may be used, or a different protocol may be used.

The computer 100 subsequently obtains information of below described (4a) and (4b) in accordance with the second program module 105.
(4a) First real identification information for identifying, in the at least one real storage device 120, the first storage region 121 (in other words, the region allocated for the first storage region 111).
(4b) Second real identification information for identifying, in the at least one real storage device 120, the second storage region 122 (in other words, the region allocated for the second storage region 112).

Specifically, the computer 100 obtains the first real identification information of (4a) by using the correspondence relation between the at least one real storage device 120 and the at least one virtual storage device 110 and the notified first virtual identification information of (3a). Similarly, the computer 100 obtains the second real identification information of (4b) by using the correspondence relation between the at least one real storage device 120 and the at least one virtual storage device 110 and the notified second virtual identification information of (3b).

In this process, the second program module 105 is executed in the second environment 102, which is capable of recognizing the at least one real storage device 120. Namely, the second program module 105 is executed in the second environment 102, from which the at least one real storage device 120 is recognizable. Then, in the second environment 102, more specifically, which real storage device 120 each virtual storage device 110 is corresponding to can be recognized. Therefore, the computer 100 can obtain the information of (4a) and (4b) by using the above described correspondence relations in accordance with the second program module 105.

The first real identification information may include, for example, information for identifying, among the at least one real storage device 120, the real storage device 120 including the first storage region 121 and information indicating the position of the first storage region 121 in the real storage device 120. Similarly, the second real identification information may include information for identifying, among the at least one real storage device 120, the real storage device 120 including the second storage region 122 and information indicating the position of the second storage region 122 in the real storage device 120.

More specifically, the information indicating the position of the storage region in the real storage device 120 may include a starting address of the storage region. For example, a combination of a starting address and a size or a combination of a starting address and an ending address may be used as the information indicating the position of the storage region.

The computer 100 subsequently issues a backup instruction in accordance with the second program module 105. The backup instruction is an instruction for backing up data from the first storage region 121 to the second storage region 122.

In accordance with the format of the backup instruction, the backup instruction may be issued to the device (for example, a RAID system or HDD) including the first storage region 121 or may be issued to the device including the second storage region 122. It is possible that the first storage region 121 and the second storage region 122 are included in the same single device (for example, the same single RAID system or the same single HDD).

Specifically, the computer 100 issues the backup instruction by using the obtained first real identification information and the obtained second real identification information. For example, the first real identification information and the second real identification information per se or part thereof (for example, the information indicating the positions) may be used as parameters of the backup instruction. Other information (for example, an identification number allocated to the real storage device 120 in a more physical level than a level where the real identification information is defined) obtained from the first real identification information and the second real identification information may be used as parameters of the backup instruction. The first real identification information and the second real identification information may be further used for determining the destination of the backup instruction.

Various instructions such as backup instructions have formats in accordance with a particular protocol (for example, SCSI (Small Computer System Interface) protocol). However, depending on the type of the protocol, the virtual identification information is not available as the parameters of the backup instruction in some cases. For example, if the backup instruction is specifically a SCSI command, the real identification information (or lower level information obtained from the real identification information) is used as the parameters.

Even if the virtual identification information is not available as the parameters of the backup instruction, data can be backed up according to the above described backup control program 103. That is, the computer 100 can issue an appropriate backup instruction by using the first real identification information and the second real identification information.

After issuing the backup instruction, the computer 100 waits for a response with respect to the backup instruction in accordance with the second program module 105 and then receives the response. The response with respect to the backup instruction is specifically returned from the control device which controls the real storage device 120 having the first storage region 121 or the second storage region 122 among the at least one real storage device 120. A specific example of the control device is a RAID controller in the RAID system or a controller in the HDD.

The computer 100 may notify the contents of the received response to the process of the first program module 104 in accordance with the second program module 105. For example, the response may include result information indicating whether the process for backup has been normally terminated or not, and the result information may be notified to the process of the first program module 104.

If the received response indicates normal termination, the computer 100 may issue a cancel instruction, which cancels the stop instruction, to the process of the data utilization program 106 in accordance with the first program module 104. In response to reception of the cancel instruction, the process of the data utilization program 106 resumes the updating operation with respect to the first storage region 111.

As explained above, the computer 100 operates in accordance with the backup control program 103 including the first program module 104 and the second program module 105. Then, when the computer 100 operates in accordance with the backup control program 103, the conditions under which backup of data in accordance with the backup instruction is feasible are relaxed. Specifically, the conditions are relaxed from below described three viewpoints of (5a) to (5c).
(5a) The viewpoint that what is the type of the information available as the parameters of the backup instruction.
(5b) The viewpoint whether the process of the data utilization program 106 can receive (i.e., accept) the stop instruction only from the inside of the first environment 101 or can receive the stop instruction also from outside of the first environment 101.
(5c) The viewpoint whether each real storage device 120 can be recognized in the first environment 101 or not.

The condition relaxation from these three viewpoints and the reasons thereof are summarized as below.

Even if the virtual identification information is not available as the parameters of the backup instruction, backup of data using the backup instruction can be carried out. The reason therefor is that the computer 100 obtains the first real identification information and the second real identification information, determines the parameters of the backup instruction based on the obtained first real identification information and second real identification information, and issues the backup instruction.

Even if the process of the data utilization program 106 can receive the stop instruction only from the inside of the first environment 101, backup of data using the backup instruction can be carried out. The reason therefor is that the stop instruction is issued in accordance with the first program module 104 executed in the first environment 101 (in other words, the stop instruction is issued from the process of the first program module 104).

Even if each real storage device 120 are not recognizable in the first environment 101, backup of data using the backup instruction can be carried out. The reason therefor is that the backup control program 103 includes not only the first program module 104 executed in the first environment 101 but also the second program module 105 which can recognize each real storage device 120 and is executed in the second environment 102. The reason is also that information is transmitted/received between the process of the first program module 104 and the process of the second program module 105.

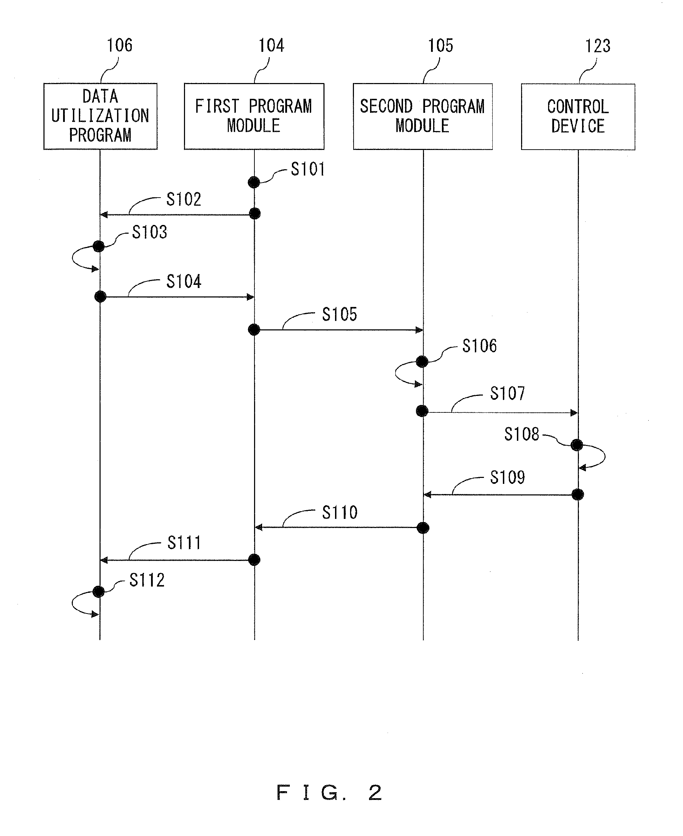

Subsequently, an example of backup control in the first embodiment will be explained with reference to a sequence diagram of FIG. 2.

In step S101, some sort of an event which triggers start of a process of backing up the data in the first storage region 111 to the second storage region 112 is generated. For example, in step S101, an event like below described (6a) or (6b) is generated.
(6a) An event that it has become the time and date scheduled in advance.
(6b) An event that a user gives an input of ordering start of a backup process via an input device.

Then, in step S102, the computer 100 issues a stop instruction in accordance with the first program module 104. In other words, the process of the first program module 104 issues the stop instruction. As described above, the stop instruction is an instruction for causing the process of the data utilization program 106 to temporarily stop an updating operation with respect to the first storage region 111.

Then, in step S103, the computer 100 carries out control for temporarily stopping the updating operation with respect to the first storage region 111 in accordance with the data utilization program 106. In other words, the process of the data utilization program 106 carries out control for temporarily stopping the updating operation with respect to the first storage region 111.

For example, if the data utilization program 106 is a DBMS program which utilizes a database (DB) on the first storage region 111, for example, processes like below (7a) to (7c) may be carried out in step S103. The processes of (7a) to (7c) are examples of processes for creating a quiescent point of data.
(7a) If a transaction(s) during execution is present, a process of executing each transaction, which is during execution, to the end and committing to it or forcibly rolling it back.
(7b) A process of writing data, which is stored in a region on a memory used as a disk cache for the first storage region 111, to the first storage region 111 (in other words, flushing).
(7c) A process of changing an operation mode of DBMS to a write-prohibiting mode.

The write-prohibiting mode may be specifically a mode in which, when a new write-access request is received, the contents of the request are stored in a queue without carrying out write access corresponding to the request. Alternatively, the write-prohibiting mode may be a mode in which, when a new write-access request is received, a result corresponding to the request is not written to the first storage region 111 but is written to a different storage region. For example, the different storage region may be a region on a memory used as a disk cache for the first storage region 111 or may be a storage region on a disk which is different from the first storage region 111.

When the control of step S103 is completed, a completion notification is transmitted in step S104 from the process of the data utilization program 106 to the process of the first program module 104. In other words, the computer 100 transmits the completion notification in accordance with the data utilization program 106 and receives the completion notification in accordance with the first program module 104.

Then, in step S105, the computer 100 notifies the first virtual identification information of above described (3a) and the second virtual identification information of above described (3b) with respect to the process of the second program module 105 in accordance with the first program module 104. In other words, the process of the first program module 104 notifies the information of above described (3a) and (3b) to the process of the second program module 105.

In next step S106, the computer 100 obtains the first real identification information of above described (4a) and the second real identification information of above described (4b) in accordance with the second program module 105. In other words, the process of the second program module 105 obtains the information of above described (4a) and (4b).

Furthermore, in step S107, the computer 100 issues a backup instruction in accordance with the second program module 105. In other words, the process of the second program module 105 issues the backup instruction.

As described above, the backup instruction may be issued to the device (for example, a RAID system or a HDD) including the first storage region 121. Alternatively, the backup instruction may be issued to the device including the second storage region 122.

FIG. 2 illustrates a control device 123 in the device which is the destination of the backup instruction (specifically, for example, a RAID controller in a RAID system or a control circuit in a HDD). The control device 123 carries out control corresponding to received instructions (for example, backup instructions, read instructions, and write instructions) and returns responses with respect to the instructions.

Specifically, in step S108, the control device 123 carries out control in accordance with the backup instruction. The control in step S108 may include, for example, a process of creating a snapshot of the first storage region 121.

If the first storage region 121 is comparatively large, actually backing up the entire first storage region 121 to the second storage region 122 takes a certain long period of time. However, the time taken for creating the snapshot is short. Therefore, the control of step S108 is immediately completed.

After creating the snapshot, the control device 123 starts a background process for actually copying (in other words, backing up) data from the first storage region 121 to the second storage region 122. This background process may be specifically a process in accordance with Copy-On-Write.

Then, in next step S109, the control device 123 returns a response with respect to the backup instruction to the process of the second program module 105.

For example, if creation of the snapshot has succeeded in step S108, the response in step S109 may be a notification indicating normal termination of the backup process. That is, even if the process of actually copying data is carried out in background after step S109, the control device 123 may pretend to the computer 100 as if the actual copy of the data has been completed in step S108. In the example of FIG. 2, the response of step S109 is assumed to be indicating normal termination of the backup process.

Then, in step S110, the computer 100 notifies the contents of the response, which has been received from the control device 123, to the process of the first program module 104 in accordance with the second program module 105. In other words, the process of the second program module 105 notifies the contents of the above described response to the process of the first program module 104.

For example, if the response of step S109 is indicating normal termination of the backup process as described above, in step S110, the normal termination of the backup process is notified to the process of the first program module 104.

Then, when the normal termination is notified in the above described manner, in step S111, the computer 100 issues a cancel instruction to the process of the data utilization program 106 in accordance with the first program module 104. In other words, the process of the first program module 104 issues the cancel instruction. As described above, the cancel instruction is an instruction for canceling the stop instruction.

Then, in step S112, the computer 100 carries out control for resuming the updating operation with respect to the first storage region 111 in accordance with the data utilization program 106. In other words, the control in step S112 is carried out by the process of the data utilization program 106.

For example, when a process of changing an operation mode is carried out like above described (7c) in step S103, a process of returning the operation mode of DBMS to a normal mode is carried out in step S112. Along with recovery to the normal mode, for example, processes as described below may be further carried out.

As described above, depending on the embodiment, the write-prohibiting mode may be a mode in which a queue is used or may be a mode in which a cache region (for example, a region on a memory used as a disk cache) different from the first storage region 111 is used. Therefore, in step S112, if contents of at least one write-access request are stored in the queue of the data utilization program 106, write access to the first storage region 111 may be carried out sequentially in accordance with the at least one write access request. Alternatively, when results are written to the above described cache region in response to some sort of a write access request(s) while the operation mode is set to the write-prohibiting mode, the results may be written to the first storage region 111 in step S112.

When the process of the data utilization program 106 newly receives a different write access request after step S112, write access corresponding to the new write access request is also carried out. For example, in the above described manner, the process of the data utilization program 106 resumes the updating operation with respect to the first storage region 111 in response to reception of the cancel instruction.

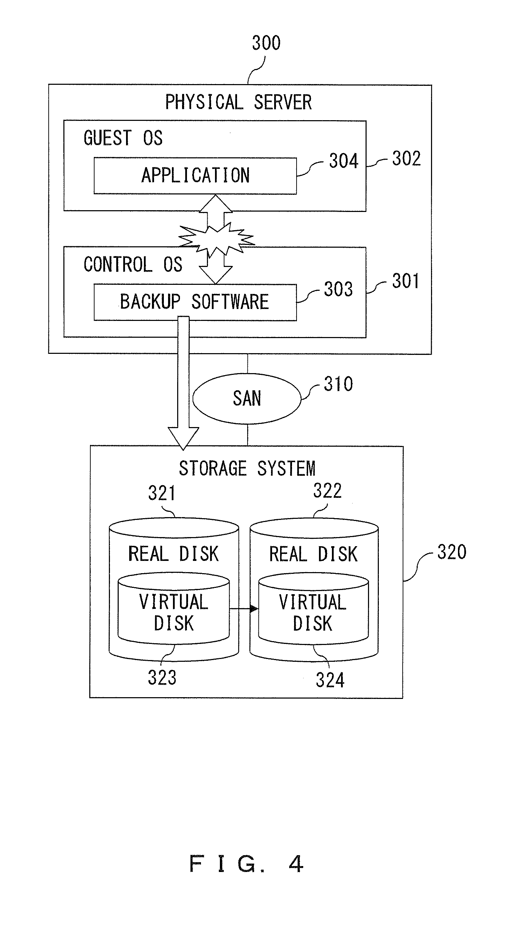

Subsequently, in order to facilitate understanding of advantages of the above described first embodiment, first to second comparative examples will be explained with reference to FIGS. 3 to 4. FIG. 3 is a drawing explaining the first comparative example, and FIG. 4 is a drawing explaining the second comparative example.

In the first comparative example of FIG. 3, a guest OS 201 operates on a physical server 200. In the physical server 200, for example, a particular OS such as that called like "control OS", management OS, or "host OS" is further operating. Real hardware (for example, real disks) can be recognized from the particular OS. However, in FIG. 3, the particular OS is omitted. In the physical server 200, an undepicted different guest OS may be further operating.

The guest OS 201 specifically operates on a virtual machine in the physical server 200. Backup software 202 and an application 203 (for example, a DBMS application), which utilizes backup-target data, operate on the guest OS 201.

The physical server 200 is connected to a storage system 220 via a SAN 210. The storage system 220 includes real disks 221 and 222. For example, the storage system 220 may be a RAID system, and each of the real disks 221 and 222 may be physically realized by a disk array.

For the convenience of explanation, the data utilized by the application 203 (in other words, the backup-target data) is assumed to be physically stored in a storage region on the real disk 221. A backup destination of the data is assumed to be a storage region on the real disk 222.

Incidentally, according to some sort of a virtualization technique, the real disks can be realized also from a virtual machine on which the guest OS 201 operates. For example, a "pass-through disk" option of Hyper-V and a "RDM" (Raw Device Mapping) option of VMware are examples of the techniques which enables a virtual machine to recognize and utilize real disks (Hyper-V and VMware are registered trademarks).

In the first comparative example, it is assumed that the real disks can be recognized from the virtual machine on which the guest OS 201 operates, for example, by using the virtualization technique as described above. When the real disks can be recognized from the virtual machine, a backup process in accordance with the backup software 202, which operates on the virtual machine, can be executed by the same procedure as that of a backup process in a real machine. The reasons therefor are as described in below (8a) to (8b).
(8a) An instruction for causing a process of the application 203 to stop write access to the real disk 221 (in other words, a stop instruction) may be defined. The instruction which can be received as the stop instruction by the process of the application 203 may be limited to the instruction issued from the inside of the virtual machine on which the guest OS 201 operates. However, even in that case, according to the first comparative example, the process of the application 203 can receive a stop instruction from a process of the backup software 202. The reason therefor is that the backup software 202 and the application 203 operate on the same guest OS 201.
(8b) It is possible that, as parameters of a backup instruction acceptable to the storage system 220, information for identifying virtual disks is not available but only information for identifying the real disks is available. However, even in that case, in the first comparative example, the process of the backup software 202 can issue a backup instruction acceptable to the storage system 220. The reason therefor is that the real disks 221 and 222 can be recognized from the virtual machine on which the guest OS 201 operates, and the backup software 202 operates on the guest OS 201.

Specifically, in the first comparative example, backup of data from the real disk 221 to the real disk 222 is carried out in a below manner.

First, the process of the backup software 202 issues a stop instruction to the process of the application 203. For example, when the backup software 202 is a DBSM application, the process of the application 203 executes control similar to above described (7a) to (7c) in response to reception of the stop instruction. As a result, a quiescent point of the data is created. In this manner, the data on the real disk 221 utilized by the application 203 becomes a backupable state as a result of issuing and receiving of the stop instruction.

After the creation of the quiescent point, the process of the application 203 notifies completion of the creation of the quiescent point to the process of the backup software 202. In this manner, the process of the backup software 202 and the process of the application 203 which operate on the same guest OS 201 can cooperate with each other.

At this point, the real disks 221 and 222 can be recognized from the process of the backup software 202, which operates on the guest OS 201. In other words, the process of the backup software 202 can obtain real identification information for identifying each of storage regions on the real disks 221 and 222.

Therefore, as a result of the notification from the process of the application 203, the process of the backup software 202 issues a backup instruction to the storage system 220. The real identification information obtained in the above described manner (or other information obtained from the real identification information) is used as parameters of the backup instruction. The backup instruction is transmitted to the storage system 220 via the SAN 210.

Then, the storage system 220 carries out control in accordance with the backup instruction. For example, the storage system 220 creates a snapshot of the storage region on the real disk 221 in which the backup-target data is stored as in step S108 of FIG. 2. When the creation of the snapshot is completed, the storage system 220 notifies completion to the process of the backup software 202. The completion notification is transmitted via the SAN 210. The storage system 220 executes, in background, a process of actually copying the data from the real disk 221 to the real disk 222.

On the other hand, in response to reception of the completion notification from the storage system 220, the process of the backup software 202 notifies the completion of the backup process to the process of the application 203. Then, the process of the application 203 carries out control similar to that of step S112 of FIG. 2. As a result, the updating process to the real disk 221 is resumed.

In the above described manner, in the first comparative example, backup of the data from the real disk 221 to the real disk 222 is carried out.

The first embodiment and the first comparative example are common in the point that "online backup can be carried out". The online backup is also called hot backup and is a process in which data is backed up without shutdown of a system such as DBMS. In other words, the first embodiment and the first comparative example are common in the point that "a backup process corresponding to a backup instruction can be carried out without stopping execution of a program which utilizes backup-target data".

However, in the first comparative example, as described above, the real disks 221 and 222 have to be able to be recognized from the environment in which the guest OS 201 operates. In other words, the first comparative example is dependent on a particular virtualization technique (for example, the "pass-through" option). Dependence on the particular virtualization technique means that "the conditions under which the backup process corresponding to the backup instruction can be carried out are limited".

On the other hand, in the first embodiment, the real storage device 120 is not required to be able to be recognized from the first environment 101. In other words, the first embodiment does not have dependency on a particular virtualization technique like the first comparative example. Therefore, in the first embodiment, the conditions under which the backup process using the backup instruction can be carried out are relaxed more than those in the first comparative example.

As is understood from the above described comparison, for a user who thinks about migration from a real system to a virtual system, the first comparative example has a system configuration in which usage of virtual disks has to be given up for the backup process. On the other hand, the first embodiment has a system configuration in which using the virtual storage device 110, which is obtained by virtualizing the real storage device 120, and carrying out online backup using the backup instruction can be both carried out. Thus, the above described relaxation of the conditions can be said as expansion of an application range of online backup or can be said as increase in the options about virtualization. Therefore, the first embodiment is excellent compared with the first comparative example.

Next, the second comparative example will be explained with reference to FIG. 4. In the second comparative example of FIG. 4, different from the first comparative example, real disks are not recognized from the virtual machine on which an application utilizing backup-target data operates.

Specifically, in the second comparative example, a control OS 301 and a guest OS 302 operate on a physical server 300. Then, on the control OS 301, backup software 303 operates. On the other hand, an application 304 (for example, a DBMS application) utilizing backup-target data operates on the guest OS 302.

The physical server 300 is connected to a storage system 320 via a SAN 310. The storage system 320 includes real disks 321 and 322. For example, the storage system 320 may be a RAID system, and each of the real disks 321 and 322 may be physically realized by a disk array.

For the convenience of explanation, data utilized by the application 304 (in other words, the backup-target data) is assumed to be physically stored in a storage region on the real disk 321. A backup destination of the data is assumed to be a storage region on the real disk 322.

Incidentally, in the second comparative example, a virtual disk 323 allocated to a region on the real disk 321 and a virtual disk 324 allocated to a region on the real disk 322 can be recognized from a virtual machine on which the guest OS 302 operates. However, the real disks 321 and 322 per se are not recognized from the virtual machine on which the guest OS 302 operates.

On the other hand, in the second comparative example, as parameters of a backup instruction acceptable to the storage system 320, the information for identifying the virtual disks is not available, but only the information for identifying the real disks is available. The backup software 303 is a program which causes a CPU (Central Processing Unit) of the physical server 300 to execute a process including issuing of the backup instruction to the storage system 320. Therefore, the backup software 303 of the second comparative example is installed so that the software operates on the control OS 301.

When the backup software 303 and the application 304 operate on mutually different OSs in this manner, online backup may be disabled in some cases. The reason therefor is that, according to a certain type of the application 304, a stop instruction for causing a process of the application 304 to stop write access can be received only from the inside of the guest OS 302, on which the application 304 operates. In other words, a certain type of the application 304 does not have an interface for receiving a stop instruction from outside of a virtual machine on which the application 304 operates.

In the second comparative example, it is assumed that the application 304 of above described type is used. For example, a process of the application 304 may be able to receive a stop instruction issued from the inside of the guest OS 302 via an API (or APIs) provided by the guest OS 302. However, it may be possible that the application 304 does not have an interface for receiving a stop instruction issued from outside of the guest OS 302 (for example, a stop instruction transmitted via a network).

If the process of the application 304 is not enabled to receive the stop instruction from outside of the guest OS 302 as described above, cooperation between the backup software 303 and the application 304 using the stop instruction is not feasible. Then, if the cooperation using the stop instruction is not feasible, a quiescent point is not created in response to issuing and receiving of the stop instruction. If the quiescent point is not created, it is not feasible to carry out online backup while maintaining consistency of data. Thus, in the second comparative example, online backup is not supported.

Therefore, in the second comparative example, offline backup (also referred to as cold backup) is carried out. Specifically, the application 304, which is being executed, is stopped first, and a backup instruction is then issued from the process of the backup software 303. After a response with respect to the backup instruction is returned from the storage system 320, the application 304 is restarted.

When offline backup is carried out in this manner, a period during which the application 304 is not executed (in other words, a period during which the process of the application 304 is disabled to receive requests from outside) arises. For example, if the application 304 is a DBMS application, an access request(s) from outside to a database is/are unacceptable during execution of offline backup because DBMS is shut down during the execution of offline backup.

On the other hand, if high availability of a service provided by the application 304 is desired, it is desirable to support online backup. In other words, the second comparative example, in which online backup is not supported, is not preferred in some cases depending on the level of desired availability.

When the second comparative example as described above is compared with the first embodiment of FIGS. 1 to 2, below facts can be said. First, the second comparative example and the first embodiment are common in the point that "it is sufficient that only virtual disks are recognizable from the environment in which the application that utilizes the backup-target data operates". However, online backup is not supported in the second comparative example as described above, on the other hand, online backup is supported in the first embodiment.

That is, even if the data utilization program 106 of FIG. 1 can receive a stop instruction only from the inside of the first environment 101, online backup is still feasible in the first embodiment of FIGS. 1 to 2. On the other hand, in the second comparative example, if the application 304 is not enabled to receive a stop instruction from outside of the guest OS 302, online backup is not feasible. Therefore, the first embodiment is more advantageous than the second comparative example.

In other words, when a user desires to utilize a particular application in a virtual environment, according to the second comparative example, the user has to give up an online backup function. However, according to the first embodiment, the user does not have to give up an online backup function.

Alternatively, when a user desires online backup in a virtual environment, as long as the backup software 303 of the second comparative example is to be utilized, the user has to give up usage of a certain type of application such as the application 304. However, according to the first embodiment, even if the data utilization program 106 can receive a stop instruction only from the inside of the first environment 101, the user does not have to give up usage of the data utilization program 106.

As described above, in the first embodiment, the conditions under which the backup process using the backup instruction can be executed are not limited to offline backup like the second comparative example, and online backup can be carried out. In the first embodiment, no particular limitation is imposed on the data utilization program 106 as the conditions for enabling execution of the backup process.

Thus, in the first embodiment, the conditions under which the backup process using the backup instruction can be executed are relaxed compared with those in the second comparative example. Since users have more options because of the relaxed conditions, the first embodiment is better than the second comparative example.

Furthermore, the first embodiment also has below advantages.

A user interface of the backup control program 103 may be similar to that of a backup control program which is executed in a non-virtualized computer. An example of the user interface is, for example, an interface for setting an execution schedule of the backup control program 103. Another example of the user interface is an interface for executing the backup control program 103 in accordance with a user-defined script.

Specifically, the user interface of the backup control program 103 may be provided by the first program module 104.

In a non-virtualized computer, a data utilization program using backup-target data and a backup control program operate on an identical OS. In the first embodiment, the first program module 104, as well as the data utilization program 106, operates in the first environment 101.

In this manner, the first program module 104 of the first embodiment and the backup control program executed in the non-virtualized computer are similar in the point that they operate in the same environment as that of the data utilization program. Therefore, a user interface similar to that of the backup control program executed in the non-virtualized computer can be provided in the first program module 104.

When the first program module 104 provides the user interface similar to that of the backup control program executed in the non-virtualized computer, there are below advantages. In this case, upon migration from a real system to a virtual system, user resources such as user-defined scripts, which have been used in the real system, can be utilized without change. Therefore, for the user, an option "to carry out migration from the real system to the virtual system without wasting user resources" can be selected.

In this manner, the first embodiment is excellent in user friendliness. The first embodiment also has an effect of facilitating the migration to the virtual system.

Subsequently, a second embodiment will be explained with reference to FIG. 5 to FIG. 12. Although detailed explanation of comparison will be omitted, the second embodiment, as well as the first embodiment, is better than the first comparative example and also better than the second comparative example.

FIG. 5 is a block diagram of the second embodiment. In the second embodiment, specifically, a Xen hypervisor is utilized as a virtualization technique. In a computer 400 of FIG. 5, the Xen hypervisor, which is not depicted, operates.

FIG. 5 illustrates two virtual machines 410 and 420, which operate on the Xen hypervisor. FIG. 5 also illustrates a storage system 440 connected to the computer 400 via a SAN 430.

The virtual machine 410 is specifically Domain U, and the virtual machine 420 is specifically Domain 0. The virtual machine 410 corresponds to the first environment 101 of FIG. 1, and the virtual machine 420 corresponds to the second environment 102 of FIG. 1.

An application 411 operates on the virtual machine 410. Hereinafter, for the convenience of explanation, the application 411 is specifically assumed to be a DBMS application. The application 411 corresponds to the data utilization program 106 of FIG. 1.

On the other hand, the virtual machine 420 (in other words, Domain 0) includes a virtual-machine managing unit 421 and XenStore 422. When the Xen hypervisor is used, one or multiple Domain Us can exist. The virtual-machine managing unit 421 manages information about the one or multiple Domain Us. XenStore 422 is a type of a database, which stores information about each domain. In XenStore 422, name space is layered.

Incidentally, as described above, in the first embodiment, the backup control program 103 includes the first program module 104, which operates on the first environment 101, and the second program module 105, which operates on the second environment 102. Similarly, a backup control program of the second embodiment includes a front-end component 412, which operates on the virtual machine 410, and a back-end component 423, which operates on the virtual machine 420.

The front-end component 412 includes a cooperation unit 413 and a request unit 414, and the back-end component 423 includes a reception unit 424 and APIs 425.

The cooperation unit 413 is a module for cooperation between the application 411 and the front-end component 412. For example, the cooperation unit 413 issues a stop instruction and a cancel instruction similar to those of the first embodiment to a process of the application 411. The cooperation unit 413 also provides a user interface.

The request unit 414 is a module for transmitting requests to the back-end component 423 from the front-end component 412 and receiving responses from the back-end component 423. The requests transmitted from the request unit 414 are received by the reception unit 424.

Although details will be described later, the reception unit 424 carries out various processes in accordance with the requests received from the request unit 414. Then, the reception unit 424 transmits the responses, which are with respect to the requests from the request unit 414, to the request unit 414.

The APIs 425 include some APIs related to the storage system 440. For example, the APIs 425 include some APIs for giving commands from the computer 400 to the storage system 440 and receiving responses to the commands from the storage system 440. The commands may be specifically, for example, SCSI commands, and the responses to the commands may be, for example, statuses returned in response to the SCSI commands. The reception unit 424 carries out some processes by using the APIs 425.

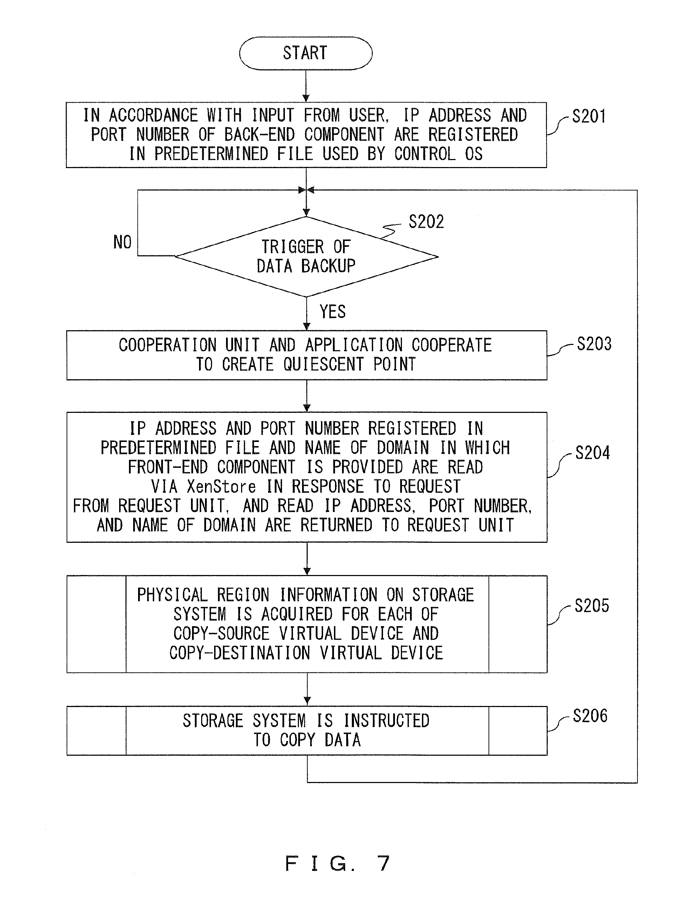

Further details of backup control carried out by cooperation by the front-end component 412 and the back-end component 423 will be described later with FIGS. 7 to 12.

The storage system 440 includes real disks 441 and 442. The storage system 440 may be specifically a RAID system, and each of the real disks 441 and 442 may be physically realized by a disk array. The RAID level thereof is arbitrary.

If the storage system 440 is a RAID system, the real disk 441 is specifically one logical unit recognized as one real disk drive from the virtual machine 420 (in other words, Domain 0). Similarly, if the storage system 440 is a RAID system, the real disk 442 is another logical unit recognized as one real disk drive from the virtual machine 420.

The real disks 441 and 442 are not recognized from the virtual machine 410 (in other words, Domain U). Instead, virtual disks 443 and 444 are recognized from the virtual machine 410. The virtual disk 443 is physically allocated to a region on the real disk 441. Similarly, the virtual disk 444 is physically allocated to a region on the real disk 442.

For the convenience of explanation, it is assumed that data utilized by the application 411 (in other words, backup-target data) is stored in the virtual disk 443. It is assumed that the region of a backup destination is in the virtual disk 444. In other words, the data utilized by the application 411 is physically stored in the real disk 441, and the data on the real disk 441 is backed up to the real disk 442.

Even if the application 411 can receive a stop instruction only from the inside of the virtual machine 410 and even if the real disks 441 and 442 is not recognizable from the virtual machine 410, online backup is still feasible according to the second embodiment. The reason therefor is that the front-end component 412 and the back-end component 423 of the backup control program are separated into the virtual machines 410 and 420 and control a backup process in in cooperation with each other.

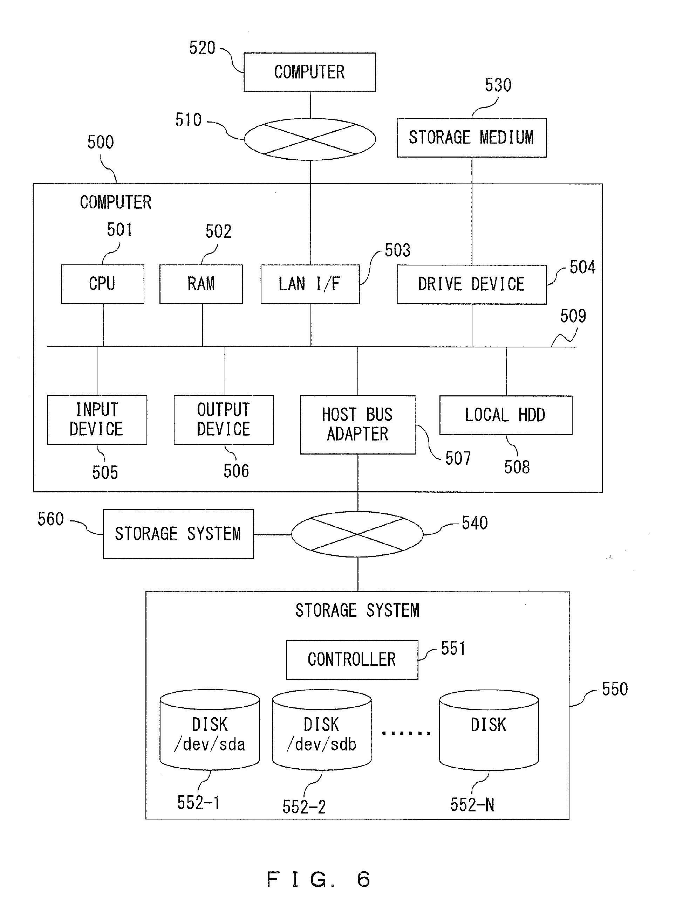

Next, an example of a hardware configuration of a system including the computer 400, the SAN 430, and the storage system 440 like those of FIG. 5 will be explained. FIG. 6 is a hardware configuration diagram of a system.

FIG. 6 illustrates a computer 500, a network 510, another computer 520 connected to the computer 500 via a network 510, and a computer-readable storage medium (i.e., recording medium) 530. The network 510 may be, for example, a LAN (Local Area Network), WAN (Wide Area Network), the Internet, or a combination thereof.

FIG. 6 also illustrates a SAN 540 and two storage systems 550 and 560 connected to the computer 500 via the SAN 540. The SAN 540 may be, for example, a network using Fiber Channel. Each of the storage systems 550 and 560 may be, for example, a RAID system in which a controller and a plurality of magnetic disks are housed in one chassis.

The storage system 560 is not required to be present. Conversely, three or more storage systems may be connected to the SAN 540.

The computer 400 of FIG. 5 may be specifically the computer 500 of FIG. 6. The SAN 430 of FIG. 5 corresponds to the SAN 540 of FIG. 6. FIG. 5 illustrates only the block of the single storage system 440; however, as illustrated in FIG. 6, two or more storage systems may be connected to the SAN 540.

For example, both of the real disks 441 and 442 of FIG. 5 may be specifically included in the storage system 550 of FIG. 6. Alternatively, one of the real disks 441 and 442 may be included in the storage system 550, and the other one of the real disks 441 and 442 may be included in the storage system 560.

The computer 500 includes a CPU 501, a RAM (Random Access Memory) 502, and a LAN interface 503. For the convenience of paper width, "interface" is described as "I/F" in FIG. 6. The computer 500 is connected to the network 510 via the LAN interface 503.

The computer 500 further has a drive device 504 of the storage medium 530, an input device 505, and an output device 506. The input device 505 includes, for example, a keyboard, may further include a pointing device such as a mouse, and may include a microphone. The output device 506 may be, for example, a display, a speaker, or a combination thereof.

Also, the computer 500 further has a host bus adapter 507 and a local HDD 508. The host bus adapter 507 is an interface connecting the computer 500 and the SAN 540.

The computer 500 may be a server which provides services to clients by using data on disks of the storage system 550 or 560. For example, the computer 500 may be a database server which provides database services by the application 411 of FIG. 5.

The data used for the services is stored in the disks of the storage system 550 or 560 as described above. On the other hand, data used for control of the computer 500 per se (for example, various programs executed by the CPU 501, data in XenStore 422, data managed by the virtual-machine managing unit 421) is stored in the local HDD 508.

Instead of the local HDD 508 (or together with the local HDD 508), a SSD (Solid-State Drive) may be used. The above described constituent elements in the computer 500 are mutually connected by a bus 509.

The CPU 501 of the computer 500 loads various programs to the RAM 502 and executes the programs while using the RAM 502 as a working area. Examples of the programs executed by the CPU 501 are as described in (9a) to (9g).
(9a) A program of the Xen hypervisor.
(9b) A program of the OS of the virtual machine 410 (in other words, Domain U).
(9c) A program of the OS of the virtual machine 420 (in other words, Domain 0).
(9d) A program of the application 411.
(9e) A program of the front-end component 412.
(9f) A program of the back-end component 423.
(9g) A program for realizing the virtual-machine managing unit 421.

In other words, the cooperation unit 413 of FIG. 5 is realized by the CPU 501. The request unit 414 is also realized by the CPU 501.

TCP/IP communication is carried out between the request unit 414 and the reception unit 424, wherein the physical LAN interface 503 is not necessarily required to be used in order to realize the request unit 414 and the reception unit 424. The reason therefor is that the LAN interface 503 is also virtualized. The TCP/IP communication between the request unit 414 and the reception unit 424 may be carried out in the level of a virtual network in the computer 500 without the intermediation of the physical LAN interface 503.

Part of the reception unit 424, as well as the request unit 414, is also realized by the CPU 501. The reception unit 424 transmits instructions and receives responses via the SAN 430 by using the APIs 425. The communication via the SAN 430 is specifically realized by the host bus adapter 507.

Incidentally, the various programs like (9a) to (9g) to be executed by the CPU 501 may be stored in the local HDD 508 in advance or may be downloaded to the computer 500 from the computer 520 via the network 510. Alternatively, the various programs to be executed by the CPU 501 may be provided by being stored in the storage medium 530. That is, the programs may be read from the storage medium 530 set in the drive device 504 and copied to the local HDD 508. Alternatively, the programs may be directly loaded to the RAM 502 from the drive device 504.

The storage medium 530 may be specifically an optical disk such as a CD (Compact Disc) or a DVD (Digital Versatile Disk), a magneto-optical disk, a magnetic disk, or a non-volatile semiconductor memory such as a flash memory card. Not only the storage medium 530 but also disk media contained in, for example, the RAM 502 and the local HDD 508 are examples of computer-readable storage media. All of the various storage media exemplified above are tangible media but are not transitory media like signal carrier waves.

Incidentally, the storage system 550 may be, for example, a RAID system as described above. The storage system 550 includes a controller 551 (more specifically, for example, a RAID controller), which controls the storage system 550. The storage system 550 includes N-units of disks 552-1 to 552-N. N is arbitrary as long as it is 1 or more. FIG. 6 exemplifies a case in which 2≤N as an example.

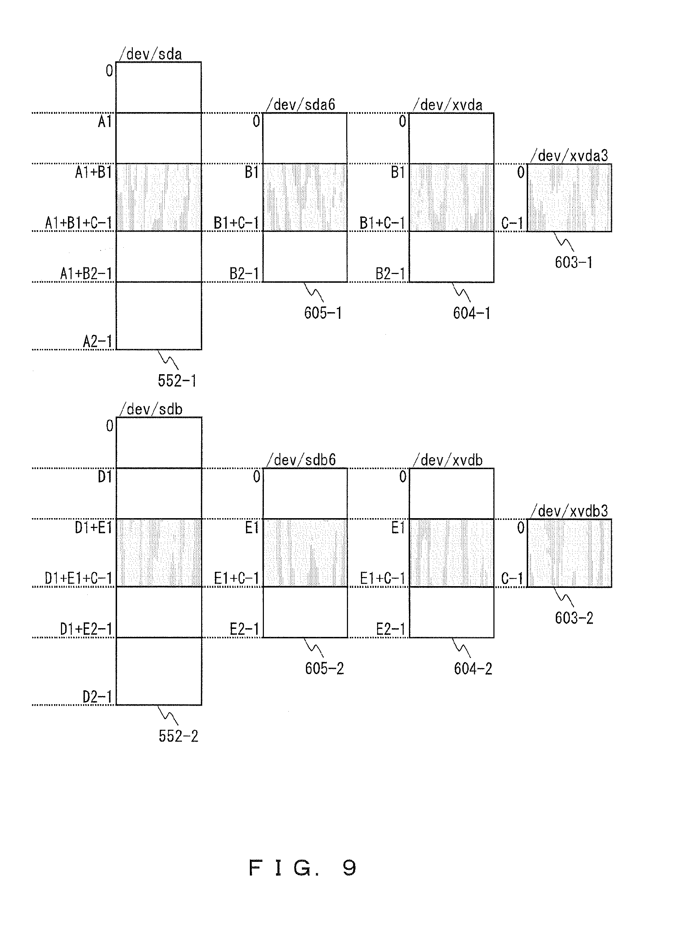

Although details will be explained with FIG. 9, the disk 552-1 is recognized as a real disk corresponding to a device file having a path name "/dev/sda" from the virtual machine 420 on the computer 400. Similarly, the disk 552-2 is recognized as a real disk corresponding to a device file having a path name "/dev/sdb" from the virtual machine 420 on the computer 400. For example, the real disk 441 of FIG. 5 may be specifically the disk 552-1 of FIG. 6, and the real disk 442 may be the disk 552-2.

Illustration of details of the storage system 560 is omitted. However, as with the storage system 550, the storage system 560 includes a controller and one or multiple disks.

The computer 100 of FIG. 1 of the first embodiment may be also specifically realized by, for example, the computer 500 of FIG. 6. Therefore, the CPU 501 may execute various programs like below (10a) to (10e).
(10a) A program for providing the first environment 101.
(10b) A program for providing the second environment 102.
(10c) The first program module 104.
(10d) The second program module 105.
(10e) The data utilization program 106.

The CPU 501 may operate as a stop-instruction issuing unit, which issues stop instructions from the inside of the first environment 101 to the process of the data utilization program 106 by executing the first program module 104. Furthermore, the CPU 501 may operate as a notification unit, which issues notifications about the first virtual identification information and the second virtual identification information from the inside of the first environment 101 by executing the first program module 104.

On the other hand, the CPU 501 may operate as an acquisition unit, which acquires, in the second environment 102, the first real identification information and the second real identification information respectively from the first virtual identification information and the second virtual identification information by executing the second program module 105. Furthermore, the CPU 501 may operate as a backup-instruction issuing unit, which issues backup instructions from the inside of the second environment 102 by executing the second program module 105.

In other words, the computer 100 is an information processing device including the stop-instruction issuing unit, the notification unit, the acquisition unit, and the backup-instruction issuing unit. Then, the stop-instruction issuing unit and the notification unit are implemented on the first environment 101, and the acquisition unit and the backup-instruction issuing unit are implemented on the second environment 102.

Each of the at least one real storage device 120 of FIG. 1 may be specifically the disk (s) in the storage system 550 or the disk(s) in the storage system 560. For example, the first storage region 121 may be a region on the disk 552-1, and the second storage region 122 may be a region on the disk 552-2.

Explanation of the second embodiment will be resumed. Hereinafter, backup control carried out in the second embodiment will be explained with reference to a flow chart and a specific data example.

FIG. 7 is a flow chart of a backup control process. The backup control process of FIG. 7 may be started at arbitrary timing after the front-end component 412 is installed in the virtual machine 410 and the back-end component 423 is installed in the virtual machine 420. Step S201 of FIG. 7 is initialization, and steps S202 to S206 are repeatedly executed after the initialization is finished.

Specifically, in step S201, information of (11a) and (11b) is registered in a predetermined file in accordance with input from a user.
(11a) An IP address of the back-end component 423 (more specifically, the reception unit 424).
(11b) A port number of the back-end component 423 (more specifically, the reception unit 424).

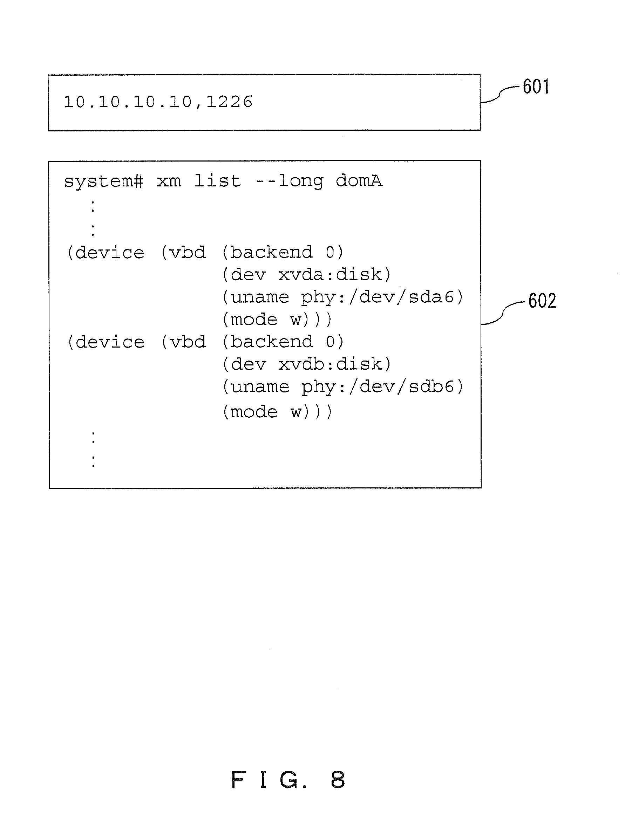

The above described predetermined file in step S201 is specifically a predetermined file used by the control OS of Domain 0. In the second embodiment, the predetermined file is, for example, a file of a CSV (Comma Separated Values) format like a file 601 of FIG. 8. In the example of FIG. 8, as a result of step S201, an IP address "10.10.10.10" of the reception unit 424 and a port number "1226" of the reception unit 424 are registered in the file 601.

The process of Step S201 is advance preparation for the communication between the request unit 414 and the reception unit 424 and, more specifically, is carried out in a below manner.

The input of above described (11a) and (11b) is given from the user via a user interface provided by the cooperation unit 413. The user inputs the information of (11a) and (11b) by using, for example, the input device 505 of FIG. 6. Then, the cooperation unit 413 receives the input.

In this case, the file 601 is a file controlled by the control OS on the virtual machine 420. Therefore, the file 601 is not directly accessed from the cooperation unit 413 which is outside of the virtual machine 420. Instead, for example, a particular driver for indirectly accessing the file 601 from the virtual machine 410 may be installed in the virtual machine 410.

The cooperation unit 413 may request the above described particular driver to register the input information of (11a) and (11b) in the file 601. The above described particular driver may register the information of (11a) and (11b) in the file 601 via XenBus.

XenBus is a mechanism used for information sharing between Domain U and Domain 0 (for example, in the example of FIG. 5, between the virtual machines 410 and 420). If access to XenBus is detected in Domain 0, XenStore 422 is referenced.

For example, a daemon which monitors access to XenBus may be operating in the virtual machine 420. The daemon may detect access from the above described particular driver to XenBus and actually write the information of (11a) and (11b) to the file 601 depending on the detected access.

For example, in the above described manner, the IP address of the reception unit 424 and the port number of the reception unit 424 are registered in the file 601 in accordance with the input from the user. Then, no particular process is required to be carried out until a trigger of data backup is generated as described in step S202. Then, every time a trigger of data backup is generated, the processes of steps S203 to S206 are executed.

Execution of the backup control program including the front-end component 412 and the back-end component 423 may be once terminated after execution of step S201. Execution of the backup control program may be once terminated also after execution of step S206. Then, the backup control program may be started again in response to generation of the trigger of data backup.

Conversely, the backup control program is not required to be terminated after execution of step S201 and S206. For example, the cooperation unit 413 may continue monitoring generation of the trigger.

The trigger of data backup is arbitrary. For example, a user may start the backup control program via the input device 505. The user may further give an instruction, which is for backing up data utilized by the application 411, to the cooperation unit 413 via the input device 505. An event in which an instruction is given from the user to the cooperation unit 413 is an example of the trigger.

Alternatively, the backup control program may be started in accordance with a determined schedule, and a script for giving some parameters to the cooperation unit 413 may be created in advance. In that case, an event that it has reached the determined day and time is the trigger.

For example, when some sort of a trigger such as that described above is generated, the cooperation unit 413 and the application 411 then cooperate to create a quiescent point in step S203. The generation of the trigger in step S202 corresponds to step S101 of FIG. 2, and the creation of the quiescent point in step S203 corresponds to steps S102 to S104. Thus, in step S203, processes similar to steps S102 to S104 are carried out.

Specifically, in step S203, the cooperation unit 413 issues a stop instruction to a process of the application 411, which is being executed. As described above, in the second embodiment, the application 411 utilizes data stored in the storage region on the virtual disk 443. Therefore, the stop instruction in the second embodiment is specifically an instruction for causing the process of the application 411 to temporarily stop an updating operation with respect to the above described storage region on the virtual disk 443.

Information for identifying the storage region on the virtual disk 443 may be specified as parameters of the stop instruction. Alternatively, the name of a database stored in the storage region or the name of a table included in the database may be specified as parameters of the stop instruction.

In response to the stop instruction, the process of the application 411 may carry out processes of (12a) to (12c) similar to, for example, the processes of (7a) to (7c) in the first embodiment.
(12a) If a transaction(s) during execution is present, a process of executing each transaction, which is during execution, to the end and committing to it or forcibly rolling it back.
(12b) A process of flushing the data stored in a region on the RAM 502 used as a disk cache for the above described storage region, which is on the virtual disk 443 and utilized by the application 411, to the above described storage region on the virtual disk 443.
(12c) A process of changing the operation mode of the application 411 (in other words, the DBMS application) to a write-prohibiting mode (the write-prohibiting mode has been explained in relation to the first embodiment).

For example, through the processes like (12a) to (12c), backup-target data (in other words, copy-source data) becomes a backupable state as a whole. The processes for causing the data to be a backupable state are not limited to the processes of (12a) to (12c). The stop instruction is an example of the instructions for causing the process of the application 411 to carry out the processes for causing the data to undergo transition to the backupable state.

For example, instead of temporarily stopping the updating operation, the process of the application 411 may cause the data to be in the backupable state by obtaining a log of the updating operation. In other words, instead of the process of (12c), a process of changing the operation mode of the application 411 to a log mode may be carried out. In this case, instead of the stop instruction which causes the process of the application 411 to change the operation mode to the write-prohibiting mode, another instruction which causes the process of the application 411 to change the operation mode to the log mode may be issued by the cooperation unit 413.

In the log mode, when a new write-access request is received, the process of the application 411 operates in the below manner. The process of the application 411 records, in the log, how the data is to be updated by write access and executes the write access in response to the request.

In the above described manner, in the log mode, write access is monitored and recorded. That is, change in the data caused by the write access which occurs while the data is actually backed up from the virtual disk 443 to the virtual disk 444 can be managed by utilizing the log mode. When such management can be carried out, a backup process maintaining consistency of the data can be carried out even though write access is not prohibited. In other words, the data becomes the backupable state by virtue of transition to the log mode.

As exemplified above, specific methods for causing the data to become the backupable state is various depending on the type of the application 411. However, hereinafter, for the convenience of explanation, it is assumed that: the stop instruction is issued from the cooperation unit 413, write access is prohibited in response to the stop instruction, and a quiescent point is created (in other words, the data becomes the backupable state) as a result.

When the process of the application 411 succeeds in creation of a quiescent point, the process transmits a completion notification to the cooperation unit 413 as in step S104 of FIG. 2.

In response to the completion notification, in next step S204, the request unit 414 obtains information to be used in communication with the reception unit 424 in later steps S205 to S206. Specifically, the request unit 414 obtains the IP address and the port number of the reception unit 424, which are registered in the file 601 of FIG. 8, and obtains the domain name of the virtual machine 410.

As explained in relation to step S201, the particular driver for indirectly accessing the file 601 from the virtual machine 410 may be installed in the virtual machine 410. A daemon, which monitors access to XenBus, may be operating in the virtual machine 420 (in other words, on the control OS). In step S204, the request unit 414 may obtain information via the above described driver and the daemon.

For example, the request unit 414 requests the above described particular driver to read the IP address and the port number registered in the file 601 and the domain name of the virtual machine 410. Then, the above described particular driver accesses XenBus, and the daemon detects the access to XenBus.

Then, in response to the detection, the daemon references XenStore 422 and specifies the file 601. The daemon reads the IP address and the port number from the file 601 and reads the domain name of the virtual machine 410 from a path "/vm/name" of XenStore 422. Then, the daemon returns the IP address, the port number, and the domain name, which have been read, to the above described particular driver. Then, the above described particular driver returns the IP address, the port number, and the domain name, which have been obtained in the above described manner, to the request unit 414.

For example through the series of processes described above, the IP address and the port number registered in the predetermined file 601 and the domain name of the virtual machine 410 are read via XenStore 422 in response to the request from the request unit 414 and are returned to the request unit 414. In other words, the request unit 414 acquires the IP address and the port number of the reception unit 424 in the above described manner. Therefore, the request unit 414 can carry out communication to/from the reception unit 424 in accordance with TCP/IP in steps S205 to S206 thereafter.

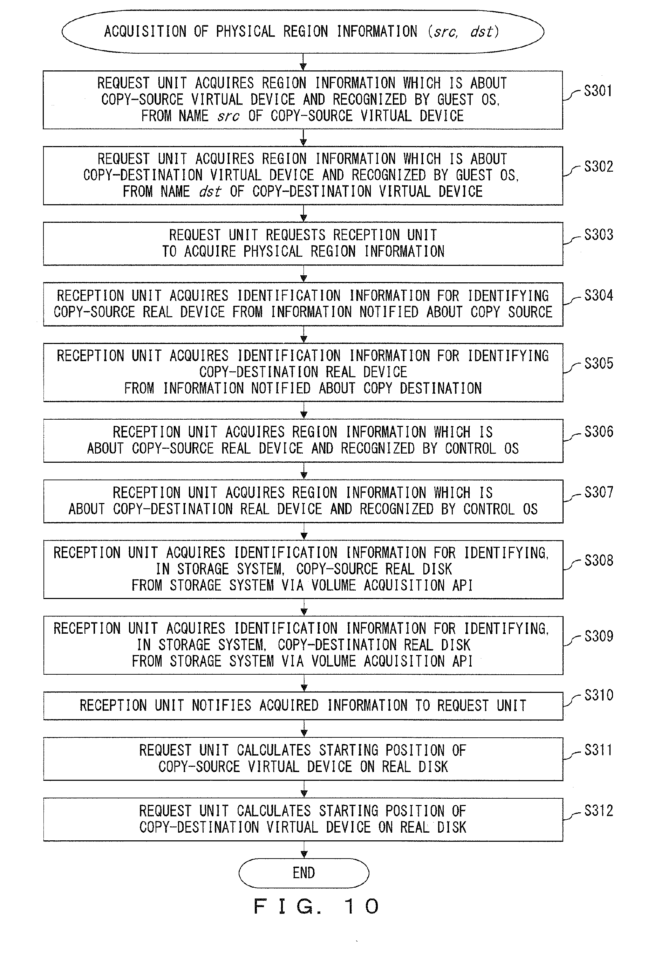

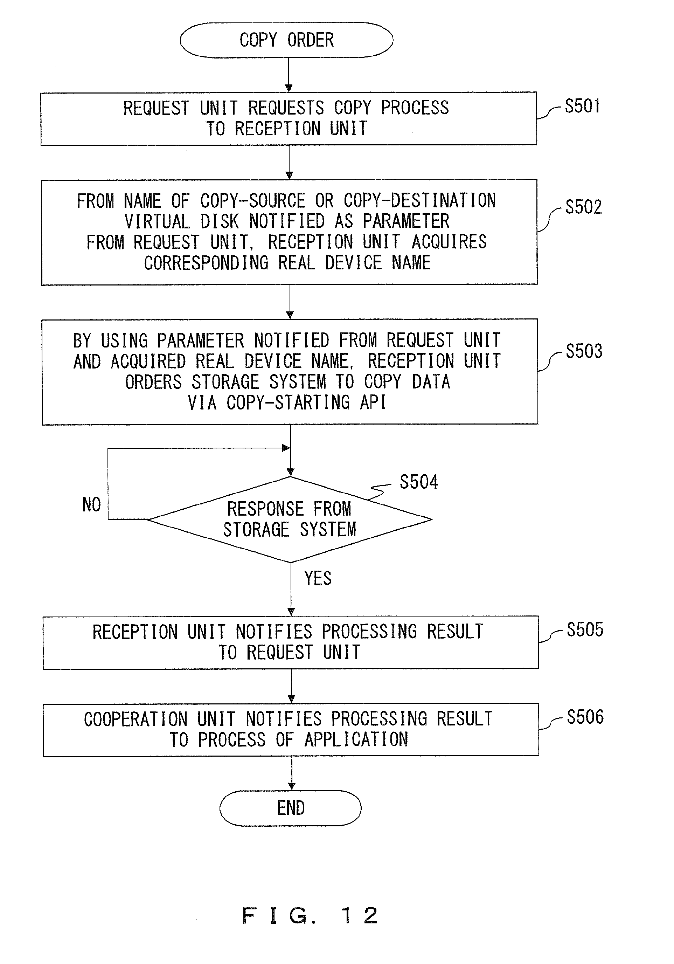

Step S205 corresponds to steps S105 to S106 of FIG. 2, and step S206 corresponds to steps S107 to S111 of FIG. 2. Details of step S205 are as depicted in FIG. 10, and details of step S206 are as depicted in FIG. 12. Herein, outlines of steps S205 and S206 will be explained.

In step S205, the request unit 414 transmits a request to the reception unit 424. Then, in response to the request, the reception unit 424 acquires physical region information (i.e., physical area information) on the storage system 440 for each of a copy-source virtual device and a copy-destination virtual device. The copy-source virtual device is a virtual device from which data is copied; the copy-destination virtual device is a virtual device to which the data is copied.

Then, in step S206, the reception unit 424 instructs the storage system 440 to copy data (in other words, to back up data). In other words, the reception unit 424 issues a backup instruction via a certain API of the APIs 425 based on the physical region information. In response to the backup instruction, the storage system 440 executes a process for backing up data and responds to the reception unit 424.

After online backup is carried out in steps S202 to S206 in the above described manner, the process of FIG. 7 returns to step 5202. As described above, after completion of step 5206, execution of the backup control program including the front-end component 412 and the back-end component 423 may be once terminated.

Subsequently, details of above described steps S205 to S206 will be explained with reference to specific value examples of FIGS. 8 to 9 and flow charts of FIGS. 10 to 12. The file 601 of FIG. 8 has been already explained in relation to steps S201 and S204. A command execution example 602 of FIG.8 will be described later together with steps S304 to S305 of FIG. 10.

FIG. 9 is a drawing explaining examples of virtual partitions, virtual disks, real partitions, and real disks.

The virtual partitions are partitions recognized from the virtual machine 410, and the virtual disks are disks recognized from the virtual machine 410. Examples of the virtual disks are the virtual disks 443 and 444 of FIG. 5.

Each of the virtual disks is physically allocated to a region on any of the real disks. Examples of the real disks are the real disks 441 and 442 of FIG. 5, the disks 552-1 to 552-N of FIG. 6, etc. Hereinafter, the disks of the reference numerals "552-1" to "552-N" will be also described as "real disks".

As a matter of course, the real disks may be also partitioned. Partitions on the real disks will be hereinafter referred to as real partitions.

On the other hand, in the second embodiment, a device file is used as an interface of a device driver. Therefore, devices are accessed via standard system calls of OS. Both of the partitions and the disks are types of devices and correspond to device files, respectively.

Thus, each of the virtual partitions and the virtual disks corresponds to a device file recognized in the virtual machine 410. Each of the real partitions and real disks corresponds to a device file recognized in the virtual machine 420.

Hereinafter, for the convenience of explanation, below (13a) to (13h) are assumed.
(13a) A backup-target storage region is one entire partition on the virtual disk 443 recognized from the virtual machine 410. The partition is specifically a virtual partition 603-1 of FIG. 9 corresponding to a device file identified by a path name "/dev/xvda3" in the virtual machine 410.
(13b) A storage region of a backup destination of data is one entire partition on the virtual disk 444 recognized from the virtual machine 410. The partition is specifically a virtual partition 603-2 of FIG. 9 corresponding to a device file identified by a path name "/dev/xvdb3" in the virtual machine 410.
(13c) The virtual partition 603-1 is one of the partitions on a virtual disk 604-1 recognized in the virtual machine 410. The virtual disk 604-1 corresponds to a device file identified by a path name "/dev/xvda" in the virtual machine 410. The virtual disk 443 of FIG. 5 is specifically the virtual disk 604-1.
(13d) The virtual partition 603-2 is one of the partitions on a virtual disk 604-2 recognized in the virtual machine 410. The virtual disk 604-2 corresponds to a device file recognized by a path name "/dev/xvdb" in the virtual machine 410. The virtual disk 444 of FIG. 5 is specifically the virtual disk 604-2.
(13e) Physically, an entire real partition 605-1 is used for the virtual disk 604-1. The real partition 605-1 corresponds to a device file identified by a path name "/dev/sda6" in the virtual machine 420.
(13f) Physically, an entire real partition 605-2 is used for the virtual disk 604-2. The real partition 605-2 corresponds to a device file identified by a path name "/dev/sdb6" in the virtual machine 420.
(13g) The real partition 605-1 is one of the partitions on the real disk 552-1 recognized in the virtual machine 420. As depicted also in FIG. 6, the real disk 552-1 corresponds to a device file identified by a path name "/dev/sda" in the virtual machine 420. The real disk 441 of FIG. 5 is specifically the real disk 552-1.
(13h) The real partition 605-2 is one of the partitions on the real disk 552-2 recognized in the virtual machine 420. As depicted also in FIG. 6, the real disk 552-2 corresponds to a device file identified by a path name "/dev/sdb" in the virtual machine 420. The real disk 442 of FIG. 5 is specifically the real disk 552-2.

Incidentally, the addresses on the devices such as the disks and partitions may be expressed by, for example, LBA (Logical Block Addressing) numbers using 512-byte sectors as units. FIG. 9 also depicts addresses as examples. Details thereof are as described below.

A region starting from an address A1 on the real disk 552-1 is used as the real partition 605-1. The real disk 552-1 has a size of A2.

A region starting from an address B1 on the virtual disk 604-1 is used as the virtual partition 603-1. The virtual disk 604-1 has a size of B2.

In the second embodiment, the entirety of the real partition 605-1 is allocated for the virtual disk 604-1. Therefore, the size of the real partition 605-1 is also B2, and the region in which the virtual partition 603-1 is physically positioned is the region starting from the address B1 on the real partition 605-1.

As depicted in FIG. 9, the virtual partition 603-1 is assumed to have a size of C. Consequently, the virtual partition 603-1 is a region from the address B1 to an address (B1+C-1) on the virtual disk 604-1. The virtual partition 603-1 physically occupies a region from the address B1 to an address (B1+C-1) on the real partition 605. If the starting address and the ending address of the region is expressed by addresses on the real disk 552-1, the addresses are an address (A1+B1) and an address (A1+B1+C-1), respectively.

A region starting from an address D1 on the real disk 552-2 is used as the real partition 605-2. The real disk 552-2 has a size of D2.

A region starting from an address E1 on the virtual disk 604-2 is used as the virtual partition 603-2. The virtual disk 604-2 has a size of E2.

In the second embodiment, the entirety of the real partition 605-2 is allocated for the virtual disk 604-2. Therefore, the size of the real partition 605-2 is also E2, and the region in which the virtual partition 603-2 is physically positioned is a region starting from the address E1 on the real partition 605-2.

Incidentally, since the virtual partition 603-2 is used for backing up the data on the virtual partition 603-1, the virtual partition 603-2 has a size equal to or larger than that of the virtual partition 603-1. Hereinafter, for brevity, the virtual partitions 603-1 and 603-2 are assumed to have the same size.

Therefore, the virtual partition 603-2 is a region from the address E1 to an address (E1+C-1) on the virtual disk 604-2. The virtual partition 603-2 physically occupies a region from the address E1 to an address (E1+C-1) on the real partition 605-2. If the starting address and the ending address of the region are expressed by addresses on the real disk 552-2, the addresses are an address (D1+E1) and an address (D1+E1+C-1), respectively.

Subsequently, details of step S205 of FIG. 7 will be explained with reference to backup of data from the virtual partition 603-1 to the virtual partition 603-2 of FIG. 9 as a specific example. FIG. 10 is a flow chart of a process of acquiring the physical region information in step S205.

For the convenience of explanation, in FIG. 10, the name of a copy-source virtual device is described as "src", and the name of a copy-destination virtual device is described as "dst". Hereinafter, unless otherwise stated, it is assumed that path names of device files corresponding to devices are used as the names of the devices.

Therefore, in the example of FIG. 9, the name src of the copy-source virtual device is the path name "/dev/xvda3" of the device file corresponding to the copy-source virtual partition 603-1. The name dst of the copy-destination virtual device is the path name "/dev/xvdb3" of the device file corresponding to the copy-destination virtual partition 603-2.

The name src of the copy-source virtual device and the name dst of the copy-destination virtual device are acquired by the cooperation unit 413 when the trigger event is detected in step S202 of FIG. 7. For example, these names src and dst may be input via the input device 505 or may be described in scripts.

Then, the names src and dst are notified from the cooperation unit 413 to the request unit 414. Therefore, the request unit 414 can start the process of FIG. 10 by using these names src and dst.

First, in step S301, the request unit 414 acquires region information about the copy-source virtual device from the name src of the copy-source virtual device. The region information acquired in step S301 is region information recognized by the guest OS (in other words, region information recognized from the virtual machine 410 including the request unit 414) and specifically includes, for example, below (14a) to (14c).
(14a) Information for identifying the virtual disk in which the virtual device is present (for example, the path name of the device file corresponding to the virtual disk).
(14b) The starting position of the virtual device on the virtual disk (for example, the starting address expressed by the LBA number).
(14c) The size of the virtual device (for example, the size expressed in units of 512-byte sectors, as is the case with the LBA number).

The above described region information is examples of the information for identifying, in the at least one virtual disk recognized in the virtual machine 410 (in the case of FIG. 9, at least the two virtual disks 604-1 and 604-2), the virtual partition 603-1. Therefore, the region information including (14a) to (14c) corresponds to the first virtual identification information depicted in (3a) of the first embodiment.

For example, in the case of the example of FIG. 9, the request unit 414 acquires region information including below (15a) to (15c) from the name (i.e., "/dev/xvda3") of the virtual partition 603-1 of the copy source in step S301.
(15a) The name (i.e., "/dev/xvda") of the virtual disk 604-1.
(15b) The address B1 indicating the starting position of the virtual partition 603-1 on the virtual disk 604-1.
(15c) The size C of the virtual partition 603-1.

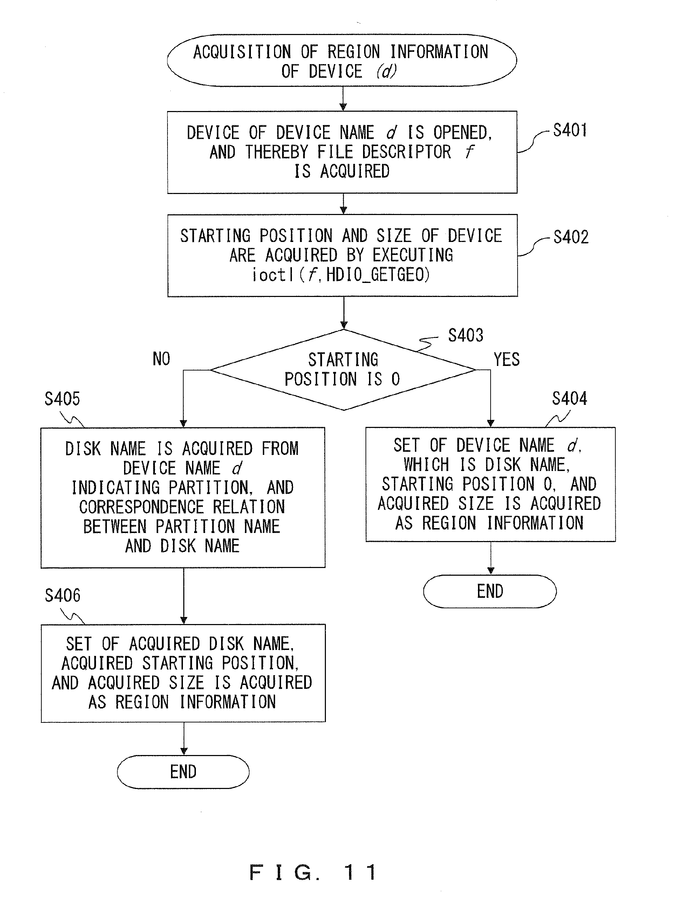

Specific methods for acquiring the region information in step S301 may be various depending on the embodiment. Herein, a method of FIG. 11 will be explained as an example. FIG. 11 is a flow chart of a process of acquiring region information of a device.

The process illustrated in FIG. 11 may be executed by the request unit 414 in the front-end component 412 or, as described later, may be executed by the reception unit 424 in the back-end component 423. If the request unit 414 executes the process of FIG. 11, region information of a virtual device is obtained from the name of the virtual device (specifically, a virtual partition or a virtual disk). On the other hand, if the reception unit 424 executes the process of FIG. 11, region information of a real device is obtained from the name of the real device (specifically, a real partition or a real disk). Hereinafter, a case in which the request unit 414 executes the process of FIG. 11 in step S301 of FIG.10 will be explained as an example.

For the convenience of explanation, in FIG. 11, the name of the device which is the target for acquiring region information is described as "d". For example, if the request unit 414 is to acquire region information from the name of the virtual partition 603-1 (i.e., "/dev/xvda3") in step S301, the device name d in FIG. 11 is "/dev/xvda3".

In step S401, the request unit 414 opens the device of the device name d and thereby acquires a file descriptor. Hereinafter, for the convenience of explanation, the acquired file descriptor will be referenced with a symbol "f". The request unit 414 can open the device of the device name d by utilizing a system call provided by the guest OS of the virtual machine 410.

Next, in step S402, the request unit 414 acquires the starting position and size of the above described device, for example, by executing a system call ioctl (f, HDIO_GETGEO).

Then, in step S403, the request unit 414 determines whether the starting position is 0 or not.

If the starting position is 0, the above described device is not a partition of part of a disk but is an entire disk. Then, the process of FIG. 11 proceeds to step S404.

Conversely, if the starting position is not 0 (more specifically, if the starting position is larger than 0), the above described device is a partition on a disk. Then, the process of FIG. 11 proceeds to step S405.

In step S404, the request unit 414 acquires a set of (16a) to (16c) below as the region information about the device identified by the device name d. Then, the process of FIG. 11 is terminated.
(16a) The device name d which is a disk name.
(16b) The starting position 0.
(16c) The size acquired in step S402.

For example, in the example of FIG. 9, the copy-target (in other words, backup-target) device is the virtual partition 603-1. However, the application 411 may utilize the entire virtual disk 604-1 depending on the embodiment.

If the application 411 utilizes the entire virtual disk 604-1, the entire virtual disk 604-1 is specified as a backup target. That is, the copy-source virtual device in step S301 of FIG. 10 may be the entire virtual disk 604-1 depending on the embodiment. For example, if the copy-source virtual device is the entire virtual disk 604-1, in step S404, the name "/dev/xdva" of the virtual disk 604-1, the starting position 0, and the size B2 are acquired.

If the starting position is not 0, the request unit 414 acquires a disk name (i.e., the name of a disk in which the partition identified by the device name d is present) from below (17a) and (17b) in step S405.
(17a) The device name d representing the partition.
(17b) The correspondence relation between a partition name and a disk name. For example, a correspondence relation expressed by a known rule such as "the name that a disk name with a number at the end thereof is used as a partition name".

For example, the device name d is the name of the virtual partition 603-1 (i.e., "/dev/xvda3"), the request unit 414 acquires a disk name "/dev/xvda" from the correspondence relation of (17b). As is understood from FIG. 9, this disk name is the name of the virtual disk 604-1 in which the virtual partition 603-1 is present.

Then, in next step S406, the request unit 414 acquires a set of below (18a) to (18c) as the region information about the device identified by the device name d. Then, the process of FIG. 11 is terminated.
(18a) The disk name acquired in step S405.
(18b) The starting position acquired in step S402.
(18c) The size acquired in step S402.

For example, if the device name d is "/dev/xvda3" , according to the example of FIG. 9, in step S402, the request unit 414 acquires the address B1 as the starting position and acquires a value C as the size. In this case, as described above, the request unit 414 acquires the disk name of the virtual disk 604-1 (that is, "/dev/xvda") in step S405. Therefore, the request unit 414 acquires the set of the disk name "/dev/xvda", the address B1, and the size C as the region information of the virtual partition 603-1.

Hereinabove, the flow chart of FIG. 11 has been explained as an example of the process of step S301 of FIG. 10. However, as a matter of course, details of the process of step S301 may be various depending on the embodiment.

For example, the flow chart of FIG. 11 depicts a process carried out in a case in which volume managing software such as LVM (Logical Volume Manager) is not used in the virtual machine 410. However, depending on the case, volume managing software may be used. In that case, in step S301, the request unit 414 may acquire the region information of the copy-source virtual device from the name of the copy-source virtual device via CLI (Command Line Interface) of the volume managing software.

Explanation of FIG. 10 will be resumed. In step S302, the request unit 414 acquires region information about a copy-destination virtual device from the name dst of the copy-destination virtual device. The region information acquired in step S302 is also the region information recognized by the guest OS. Details of the process of step S302 are similar to those of step S301.

The region information acquired in step S302 is an example of the information for identifying, in the at least one virtual disk (in the case of FIG. 9, at least two virtual disks 604-1 and 604-2) recognized in the virtual machine 410, the virtual partition 603-2. Therefore, the region information acquired in step S302 corresponds to the second virtual identification information depicted in (3b) of the first embodiment.

For example, in the example of FIG. 9, the request unit 414 acquires region information including below (19a) to (19c) from the name of the copy-destination virtual partition 603-2 (i.e., "/dev/xvdb3") in step S302.
(19a) The name of the virtual disk 604-2 (i.e., "/dev/xvdb").
(19b) The address E1 indicating the starting position of the virtual partition 603-2 on the virtual disk 604-2.
(19c) The size C of the virtual partition 603-2.

Then, in next step S303, the request unit 414 notifies information listed in (20a) to (20d) below to the reception unit 424 in accordance with TCP/IP. Notification in step S303 is, in other words, a request which requests the reception unit 424 to acquire physical region information about the copy-source virtual device and the copy-destination virtual device. Step S303 corresponds to step S105 of FIG. 2.
(20a) The name of the virtual disk (for example, the name "/dev/xvda" of (15a)) in the region information about the copy-source virtual device acquired in step S301.
(20b) The name of the virtual disk (for example, the name "/dev/xvdb" of (19a)) in the region information about the copy-destination virtual device acquired in step S302.
(20c) The domain name of the virtual machine 410 in which the request unit 414 is included.
(20d) The identification information (for example, an ID (identifier) expressed by a number such as "7") for identifying, among the APIs 425, a particular API corresponding to the process in which the request unit 414 gives the request to the reception unit 424 in step S303.

The request unit 414 has already acquired the IP address and the port number of the reception unit 424 in step S204 of FIG. 7. Therefore, the request unit 414 can carry out TCP/IP communication with the reception unit 424 by using the acquired IP address and the port number. When TCP/IP is utilized, communication between the request unit 414 and the reception unit 424 included in mutually different machines can be carried out.

When a notification from the request unit 414 is received, the reception unit 424 carries out the processes of steps S304 to S309 and responds to the request unit 414 in step S310. Steps S304 to S309 correspond to step S106 of FIG. 2, and details thereof are as described below.

In step S304, the reception unit 424 acquires identification information for identifying the copy-source real device from the information of (20a) (i.e. , the virtual disk name) notified about the copy source. Specifically, the reception unit 424 may acquire the identification information of the copy-source real device, for example, by utilizing the xm command specifying a "list --long" option. Since the reception unit 424 is in the virtual machine 420 on which the control OS operates, the reception unit 424 can invoke and use the xm command.

For example, as depicted in the command execution example 602 of FIG. 8, the reception unit 424 may invoke the xm command by using the domain name (for example, "domA") notified from the request unit 414 as a parameter. For the convenience of reference, in FIG. 8, the command execution example 602 is depicted in the format of S-expression with appropriate addition of line breaks and blanks.

The reception unit 424 searches for an S-expression which satisfies both of below conditions (21a) to (21b) from among execution results of the command.
(21a) Provided with "device" tag
(21b) Including an S-expression which associates the virtual disk name, which has been notified from the request unit 414, with a "dev" tag.

In the case of the command execution example 602, an S-expression which has the tag "device" and which includes the S-expression " (dev xvda: disk) " is found. Then, the reception unit 424 searches the found S-expression for an inner nested S-expression including a tag "uname". In the case of the command execution example 602, the S-expression " (uname phy:/dev/sda6)" is found.

The reception unit 424 acquires a real device name associated with the tag "uname" in the found S-expression. In the case of the command execution example 602, a real device name "/dev/sda6" is acquired. The real device name "/dev/sda6" acquired in this manner is the name of the real partition 605-1 (i.e., the real device in which the copy-source virtual partition 603-1 is physically positioned) as depicted in FIG. 9.

The reception unit 424 acquires, for example, as described above, the identification information of the copy-source real device by using an xm command. It is matter of course that, in some embodiments, any command other than the xm command may be used.

Next, in step 305, the reception unit 424 acquires the identification information for identifying the copy-destination real device from the information of (20b) (i.e., the virtual disk name) notified about the copy destination. For example, the reception unit 424 may acquire the identification information of the copy-destination real device in step S305 by a method similar to that of step S304 by using the result of the xm command executed in step S304.

According to the command execution example 602 of FIG. 8, a real device name "/dev/sdb6" is acquired from the virtual disk name "/dev/xvdb". The real device name "/dev/sdb6" acquired in this manner is, as depicted in FIG. 9, the name of the real partition 605-2 (i.e., the real device in which the copy-destination virtual partition 603-2 is physically positioned).

Then, in step S306, the reception unit 424 acquires region information about the copy-source real device from the identification information acquired in step S304. The region information acquired in step S306 is the region information recognized by the control OS (that is, the region information recognized from the virtual machine 420 including the reception unit 424) and specifically includes, for example, below (22a) to (22c).
(22a) The information for identifying the real disk in which the real device is present (for example, the path name of the device file corresponding to the real disk).
(22b) The starting position of the real device on the real disk (for example, the starting address expressed by a LBA number).
(22c) The size of the real device (for example, the size expressed in units of 512-byte sectors, as is the case with the LBA number).

For example, in the case of the example of FIG. 9, in step S306, the reception unit 424 acquires the region information including below (23a) to (23c) from the name of the copy-source real partition 605-1 (i.e., "/dev/sda6").
(23a) The name of the real disk 552-1 (i.e., "/dev/sda").
(23b) The address A1 indicating the starting position of the real partition 605-1 on the real disk 552-1. In other words, The address A1 indicating the starting position of the region occupied by the virtual disk 604-1 on the real disk 552-1.
(23c) The size B2 of the real partition 605-1.

Specific methods for acquiring the region information in step S306 may be various depending on the embodiment. For example, if volume managing software such as LVM is not used in the virtual machine 420, the reception unit 424 may acquire region information including above described (22a) to (22c) in accordance with the flow chart of FIG. 11. FIG. 11 has been specifically explained about the case in which the request unit 414 carries out the process of FIG. 11. However, the reception unit 424 can also carry out the process of FIG. 11 as described above.

Alternatively, if volume managing software is used in the virtual machine 420, the reception unit 424 may acquire the region information about the copy-source real device from the name of the copy-source real device via CLI of the volume managing software.

Next, in step S307, the reception unit 424 acquires region information about the copy-destination real device from the identification information acquired in step S305. The region information acquired in step S307 is also the region information recognized by the control OS. Details of step S307 are similar to those of step S306.

For example, in the case of the example of FIG. 9, in step S307, the reception unit 424 acquires the region information including below (24a) to (24c) from the name of the copy-destination real partition 605-2 (i.e., "/dev/sdb6").
(24a) The name of the real disk 552-2 (i.e., "/dev/sdb").
(24b) The address D1 indicating the starting position of the real partition 605-2 on the real disk 552-2. In other words, the address D1 indicating the starting position of the region occupied by the virtual disk 604-2 on the real disk 552-2.
(24c) The size E2 of the real partition 605-2.

Then, in next step S308, the reception unit 424 acquires the identification information for identifying, in the one or plurality of storage system(s) 440 (for example, in FIG. 6, the two storage systems 550 and 560) connected to the computer 400, the copy-source real disk 552-1. The acquisition of the identification information in step S308 is specifically carried out via the particular API identified by the identification information of (20d) being notified in step S303 among the APIs 425. Hereinafter, for the convenience of explanation, this particular API will be referred to as "volume acquisition API".

For example, it is assumed that both of the storage systems 550 and 560 of FIG. 6 are RAID systems which receive SCSI commands. In that case, in step S308, the reception unit 424 specifically issues a SCSI command to the real disk 552-1 via the volume acquisition API.

For example, the SCSI command may be issued in the below manner. The reception unit 424 specifies the name of the real disk 552-1 as a parameter and invokes the volume acquisition API. As a result, a device file having the specified name is opened by the volume acquisition API, and a file descriptor is acquired. Furthermore, a system call ioctl() specifying the acquired file descriptor and the contents of the SCSI command as parameters is invoked from the volume acquisition API.

Issuing of the SCSI command may be realized, for example, by the series of processes described above. The issued SCSI command is transmitted via the host bus adapter 507 and the SAN 540.

As a response to the SCSI command, the reception unit 424 acquires the identification information, which is for identifying, in the storage systems 550 and 560, the real disk 552-1, from the storage system 550 that includes the real disk 552-1. The acquired identification information specifically includes below (25a) to (25b).
(25a) The identification information of the storage system having the copy-source real disk (hereinafter, also referred to as a storage system ID). For example, an ID (for example, an ID expressed by a number such as "1") of the storage system 550 including the real disk 552-1.
(25b) The identification information for identifying, in the disk array of the storage system identified by the identification information of above described (25a), a volume corresponding to the copy-source real disk (hereinafter, also referred to as a volume ID). For example, an ID (for example, an ID expressed by a number such as "2") which is used for identifying, in the storage system 550, the volume corresponding to the real disk 552-1 and is unique in the storage system 550. The volume ID may be specifically a LUN (Logical Unit Number).

Furthermore, in step S309, the reception unit 424 acquires the identification information for identifying, in the one or plurality of storage system (s) 440 (for example, the two storage systems 550 and 560 in FIG. 6) connected to the computer 400, the copy-destination real disk 552-2. Details of step S309 are similar to those of step S308. The reception unit 424 acquires the identification information including, for example, below (26a) to (26b) from the storage system 550 including the real disk 552-2 via the volume acquisition API.
(26a) A storage system ID of the storage system 550 including the real disk 552-2.
(26b) A volume ID for identifying, in the disk array of the storage system 550, the volume corresponding to the real disk 552-2.

Then, in next step S310, the reception unit 424 notifies the information, which has been acquired in the processes of steps S304 to S309, to the request unit 414. The notification of step S310 is a response with respect to the request of step S303.

The notification in step S310 is carried out also in accordance with TCP/IP. In step S310, specifically, the information of below (27a) to (27g) is notified.
(27a) The information depicting processing results (for example, a combination of a recovery code and an error number).
(27b) The storage system ID acquired in step S308 (for example, the ID of the storage system 550).
(27c) The volume ID acquired in step S308 (for example, the volume ID corresponding to the real disk 552-1 in the storage system 550).
(27d) The starting position acquired in step S306 (for example, the address A1).
(27e) The storage system ID acquired in step S309 (for example, the ID of the storage system 550).
(27f) The volume ID acquired in step S309 (for example, the volume ID corresponding to the real disk 552-2 in the storage system 550).
(27g) The starting position acquired in step S307 (for example, the address D1).

For the sake of brevity, error processing has not been particularly mentioned in the above explanation. However, some sort of errors can occur depending on the case. When some sort of errors occur, all of the items of above described (27b) to (27g) may have invalid values.

Hereinafter, for the sake of brevity of explanation, it is assumed that no error has occurred. That is, it is assumed that the recovery code of (27a) is a value indicating success.

When the response from the reception unit 424 is received, the request unit 414 calculates the starting position of the copy-source virtual device on the real disk in step S311. Specifically, the request unit 414 adds the starting position of (27d) included in the response from the reception unit 424 and the starting position of (14b) acquired in step S301.

According to the example of FIG. 9, the copy-source virtual device is the virtual partition 603-1, the starting position of (27d) is the address A1, and the starting position of (14b) is the address B1 as exemplified in (15b). Therefore, the request unit 414 adds the addresses A1 and B1. As a result, the address (A1+B1) which is the starting position of the virtual partition 603-1 on the real disk 552-1 is acquired.

In the above described manner, the information corresponding to the first real identification information depicted in (4a) of the first embodiment is acquired also in the second embodiment. That is, the information for identifying, in the at least one real disk (in the case of FIG. 9, at least the two real disks 552-1 and 552-2), the storage region occupied by the virtual partition 603-1 is acquired.

When viewed from one point of view, the combination of the real disk name (i.e., "/dev/sda") of (23a) and the address (A1+B1) calculated in step S311 corresponds to the first real identification information. When viewed from another point of view, the combination of the storage system ID of (25a), the volume ID of (25b), and the address (A1+B1) calculated in step S311 corresponds to the first real identification information. However, in any case, the information corresponding to the first real identification information is acquired based on the result that the computer 400 has operated in accordance with the back-end component 423.

In step S312, the request unit 414 calculates the starting position of the copy-destination virtual device on the real disk. Specifically, the request unit 414 adds the starting position of (27g) included in the response from the reception unit 424 and the starting position acquired in step S302 (for example, the starting position exemplified in (19b)).

According to the example of FIG. 9, the copy-destination virtual device is the virtual partition 603-2, the starting position of (27g) is the address D1, and the starting position acquired in step S302 is the address E1 as exemplified in (19b). Therefore, the request unit 414 adds the addresses D1 and E1. As a result, the address (D1+E1), which is the starting position of the virtual partition 603-2 on the real disk 552-2, is acquired.

In the above described manner, the information corresponding to the second real identification information depicted in (4b) of the first embodiment is acquired also in the second embodiment. That is, the information for identifying, in the at least one real disk (in the case of FIG. 9, at least the two real disks 552-1 and 552-2), the storage region occupied by the virtual partition 603-2 is acquired.

When viewed from one point of view, the combination of the real disk name (i.e., "/dev/sdb") of (24a) and the address (D1+E1) calculated in step S312 corresponds to the second real identification information. When viewed from a different point of view, the combination of the storage system ID of (26a), the volume ID of (26b), and the address (D1+E1) calculated in step S312 corresponds to the second real identification information. However, in any case, the information corresponding to the second real identification information is acquired based on the result that the computer 400 has operated in accordance with the back-end component 423.

In the above described manner, the physical region information is acquired in accordance with the flow chart of FIG. 10. The execution order of steps in the process of FIG. 10 may be appropriately switched as long as it is compatible. For example, the order of steps S301 and S302 may be reversed. The order of steps S311 and S312 may be also reversed. The order of steps S304 to S309 can be variously changed. For example, an execution order: steps S305, S307, S309, S304, S306, and S308 can be also used.

After the process of FIG. 10 is terminated, then, the process of FIG. 12 corresponding to step S206 of FIG. 7 is carried out. FIG. 12 is a flow chart of a process of ordering the storage system to copy data.

In step S501, the request unit 414 requests the reception unit 424 to carry out a copy process. Upon the request, the request unit 414 notifies the parameters of below (28a) to (28j) to the reception unit 424. The request in step S501 is also carried out specifically in accordance with TCP/IP.
(28a) The domain name of the virtual machine 410 in which the request unit 414 is present.
(28b) The identification information (for example, an ID expressed by a number such as "3") for identifying, among the APIs 425, the particular API (hereinafter, referred to as copy-starting API for the convenience of explanation) corresponding to the process in which the request unit 414 gives the request to the reception unit 424 in step S501.
(28c) The name of the virtual disk serving as a target for issuing a SCSI command for copying data. In the example of FIG. 9, the name of the copy-source virtual disk 604-1 "/dev/xvda" or the name of the copy-destination virtual disk 604-2 "/dev/xvdb".
(28d) The storage system ID (for example, the ID of the storage system 550) of (27b) corresponding to the copy-source virtual device and notified in step S310 of FIG. 10.
(28e) The volume ID (for example, the volume ID corresponding to the real disk 552-1 in the storage system 550) of (27c) corresponding to the copy-source virtual device and notified in step S310 of FIG. 10.
(28f) The starting position (for example, the address (A1+B1)) calculated in step S311 of FIG. 10 in relation to the copy-source virtual device.
(28g) The size (for example, the size C) acquired in step S301 of FIG. 10 in relation to the copy-source virtual device.
(28h) The storage system ID (for example, the ID Of the storage system 550) of (27e) corresponding to the copy-destination virtual device and notified in step S310 of FIG. 10.
(28i) The volume ID (for example, the ID of the volume corresponding to the real disk 552-2 in the storage system 550) of (27f) corresponding to the copy-destination virtual device and notified in step S310 of FIG. 10.
(28j) The starting position (for example, the address (D1+E1)) calculated in step S312 of FIG. 10 in relation to the copy-destination virtual device.

Then, in step S502, from the name of the copy-source or copy-destination virtual disk notified as the parameter of (28c) from the request unit 414, the reception unit 424 acquires the corresponding real device name.

For example, if "/dev/xvda" which is the name of the copy-source virtual disk 604-1 is notified as the parameter of (28c), the reception unit 424 acquires the name of the real partition 605-1 corresponding to the virtual disk 604-1. The reception unit 424 can acquire "/dev/sda6", which is the name of the real partition 605-1, by utilizing, for example, a xm command as in step S304 of FIG. 10.

Alternatively, if "/dev/xvdb", which is the name of the copy-destination virtual disk 604-2, is notified as the parameter of (28c), the reception unit 424 acquires the name of the real partition 605-2 corresponding to the virtual disk 604-2. The reception unit 424 can acquire "/dev/sdb6", which is the name of the real partition 605-2, as in step S305 of FIG. 10.

Then, in step S503, the reception unit 424 issues an instruction for ordering the storage system 440 to copy (i.e., back up) the data. Specifically, the reception unit 424 issues the instruction to the storage system 440 by using the parameters notified from the request unit 414 and the real device name acquired in step S502. The issuing of the instruction is carried out via the copy-starting API specified by the parameter of (28b) among the APIs 425. Step S503 corresponds to step S107 of FIG. 2, and the instruction issued in step S503 corresponds to the backup instruction of the first embodiment.

More specifically, in order to issue a SCSI command via the copy-starting API, the reception unit 424 specifies the parameters of below (29a) to (29h) with respect to the copy-starting API in step S503.
(29a) The name of the real device serving as the target to which the SCSI command is issued (i.e., the name acquired in step S502).
(29b) The storage system ID corresponding to the copy-source virtual device (i.e., the storage system ID of (28d) notified from the request unit 414).
(29c) The volume ID corresponding to the copy-source virtual device (i.e., the volume ID of (28e) notified from the request unit 414).
(29d) The starting position of the copy-source virtual device on the real disk (i.e., the address of (28f) notified from the request unit 414).
(29e) The size of the copy-source virtual device (i.e., the size of (28g) notified from the request unit 414).
(29f) The storage system ID corresponding to the copy-destination virtual device (i.e., the storage system ID of (28h) notified from the request unit 414).
(29g) The volume ID corresponding to the copy-destination virtual device (i.e. , the volume ID of (28i) notified from the request unit 414).
(29h) The starting position of the copy-destination virtual device on the real disk (i.e. the address of (28j) notified from the request unit 414).

Among the above described parameters, the parameters of (29b) to (29h) are used as the parameters of the SCSI command. On the other hand, the parameter of (29a) is used for opening the device file of the real device and acquiring a file descriptor.

The acquired file descriptor and the contents of the SCSI command, in which the parameters of (29b) to (29h) are specified, are specified as parameters in a system call ioctl() with respect to the opened device file. As a result, the SCSI command corresponding to the backup instruction of the first embodiment is issued via the copy-starting API. The SCSI command is transmitted via the host bus adapter 507 and the SAN 540.

As the parameter of (28c) notified from the request unit 414 to the reception unit 424 in step S501, only either one of the name of the copy-source virtual disk and the name of the copy-destination virtual disk is satisfactory. Therefore, the parameter of (29a) specified in the copy-starting API in step S503 by the reception unit 424 is also either one of the name of the copy-source real device and the name of the copy-destination real device. The reasons why only it is satisfactory with the name of the real device of either one of the copy source and the copy destination are as described below.

For example, there is a case in which the copy-source real device and the copy-destination real device are included in the same storage system 550 as depicted in FIG. 6 and FIG. 9. In that case, receiving the SCSI command by the storage system 550 is satisfactory.

In some cases, it is possible that one of the copy-source real device and the copy-destination real device is included in the storage system 550, and the other one is included in the storage system 560. However, even when the copy-source and copy-destination real devices are separated into the storage system 550 and 560, receiving the SCSI command only by one of the storage systems 550 and 560 is satisfactory.

For example, it is assumed that the copy-source real device is included in the storage system 550 the copy-destination real device is included in the storage system 560 and that the SCSI command is transmitted to the storage system 550. Also in such a case, when the storage system 550 transmits appropriate control information to the storage system 560 via the SAN 540, the storage systems 550 and 560 carry out cooperation to carry out a copy process (i.e., backup process).

Conversely, when the SCSI command is transmitted to the storage system 560, the storage system 560 can transmit appropriate control information to the storage system 550 via the SAN 540. In either case, the transmission of the control information may be carried out in accordance with a SCSI protocol.

Therefore, it is sufficient for the reception unit 424 to transmit the SCSI command to only one of the storage systems 550 and 560 via the copy-starting API.

Hereinafter, in order to simplify explanation, it is assumed that both of the copy-source real disk 552-1 and the copy-destination real disk 552-2 are included in the single storage system 550 as depicted in FIG. 6. In this case, in response to the SCSI command transmitted in step S503, the storage system 550 copies (that is, backs up) data in accordance with control by the controller 551. Specifically, the storage system 550 may operate, for example, in a below manner.

The storage system 550 creates a snapshot of the first storage region (for example, a gray region on the real disk 552-1 of FIG. 9) specified by the parameters of (29b) to (29e). The creation of the snapshot corresponds to step S108 of FIG. 2. After creation of the snapshot, the storage system 550 actually copies data from the first storage region to the second storage region (for example, a gray region on the real disk 552-2 of FIG. 9) specified by the parameters of (29e) to (29h).

The size of the second storage region is the same as the size of the first storage region. Therefore, both of the sizes are indicated by the parameter of (29e).

The above described process of copying the data from the first storage region to the second storage region is carried out in background. After creation of the snapshot, the storage system 550 returns a response to the reception unit 424 before the background process is completed (for example, before the background process is started). This response indicates completion of the process of copying the data. The process of returning the response corresponds to step S109 of FIG. 2.

When the storage system 550 operates in the above described manner, the reception unit 424 recognizes as if the process of actually copying the data has been completed even though, actually, the storage system 550 is executing the process of copying the data in background.

If the size of the first storage region is large, actually copying data from the first storage region to the second storage region takes a certain long period of time. However, even if the size of the first storage region is large, creation of the snapshot takes only a short period of time. Therefore, when the storage system 550 operates in the above described manner, the reception unit 424 recognizes that "the backup of the data from the first storage region to the second storage region has been completed in a short period of time".

Step S504 in FIG. 12 represents that the reception unit 424 waits for reception of the response from the storage system 440 (specifically, for example, the storage system 550). When the reception unit 424 receives the response, for example, via the copy-starting API, the process of FIG. 12 proceeds to step S505.

In step S505, the reception unit 424 notifies the processing result to the request unit 414. Step S505 corresponds to step S110 of FIG. 2.

For example, when creation of the snapshot has succeeded, the response from the storage system 440 indicates that the process of copying data has been normally terminated. Therefore, in this case, the reception unit 424 notifies the normal termination to the request unit 414. Conversely, when creation of the snapshot has failed due to some reason, the response from the storage system 440 indicates an error; therefore, the reception unit 424 also notifies an error to the request unit 414 . The notification of step S505 is also carried out in accordance with TCP/IP.

In the end, in step S506, the cooperation unit 413 notifies the processing result to the process of the application 411. Step S506 corresponds to step S111 of FIG. 2.

That is, the cooperation unit 413 notifies the processing result, which has been received by the request unit 414 from the reception unit 424 in step S505, to the process of the application 411. The notification in step S506 may be carried out, for example, via a standard API, which is provided by the guest OS which operates on the virtual machine 410 and is for inter-process communication in the virtual machine 410.

If the notification from the cooperation unit 413 indicates normal termination, the process of the application 411 resumes the updating operation with respect to the virtual partition 603-1. That is, the notification from the cooperation unit 413 indicating normal termination corresponds to the cancel instruction in the first embodiment.

More specifically, the process of the application 411, for example, changes the operation mode from the write-prohibiting mode to the normal mode. Along with change of the operation mode, the process of the application 411 may flush the data, which is in a cache region caching the results of write access received during operation in the write-prohibiting mode, to the virtual partition 603-1. The process as described above for resuming the updating operation corresponds to step S112 of FIG. 2.

Then, when a new write access request is received, the process of the application 411 executes write access to the virtual partition 603-1 in accordance with the write access request.

Incidentally, the present invention is not limited to the above described embodiments. Although some modifications have been explained in the above explanation, the above described embodiments can be further variously modified from below described points of view. The above described and below described modifications can be arbitrarily combined as long as they are compatible.

In the second embodiment, the Xen hypervisors are utilized, the virtual machine 410 of the second embodiment corresponds to the first environment 101, and the virtual machine 420 of the second embodiment corresponds to the second environment 102 of the first embodiment. However, as explained in above described (1a) to (1b) and (2a) to (2c) in relation to the first embodiment, the virtualization technique which provides the first environment 101 and the second environment 102 is not particularly limited to the Xen hypervisors. Therefore, with appropriate change corresponding to the difference in the virtualization technique, the second embodiment, which utilizes the Xen hypervisors, can be applied also to the case in which a virtualization technique other than the Xen hypervisors is used.

For example, in the second embodiment, when the Xen hypervisors are used, particular XenStore 422 and xm commands are used. However, when a different virtualization technique is used, utilization of XenStore 422 and the xm commands in the second embodiment may be appropriately replaced by utilization of different components or different commands depending on the type of the virtualization technique. When such appropriate replacement is carried out, even when a virtualization technique other than the Xen hypervisors is used, backup control similar to the second embodiment can be carried out.

Both of the data utilization program 106 of FIG. 1 and the application 411 of FIG. 5 may be, for example, DBMS applications as described above, but may be applications of other types.

In the example of FIG. 9, the virtual disk and the real disk have different sizes, and each real partition, which is part of the real disk, is allocated to each virtual disk. However, depending on the embodiment, the real disk and the virtual disk may have the same size. That is, the entirety of each real disk may be allocated to each virtual disk. The second embodiment can be applied also to such a case.

If the real disk and the virtual disk have the same size, in the process of FIG. 11 carried out by the reception unit 424 in steps S306 and S307 of FIG. 10, the starting position 0 is acquired in step S402, and step S404 is executed. However, the flow chart per se depicted in FIGS. 7 and 10 to 12 does not any change.

In relation to the second embodiment, the case in which one entire virtual partition is a backup target has been explained specifically. However, the backup-target storage region may be part of a virtual partition.

Specific examples of the parameters of the SCSI command have been explained in relation to the second embodiment; however, depending on the embodiment, a different option(s) may be further specified as a parameter(s) in the SCSI command. Moreover, depending on the embodiment, a storage system, which receives commands in accordance with a different protocol other than the SCSI protocol, may be used. The type of SAN is also arbitrary depending on the embodiment.

In the first embodiment, the computer 100 may check whether the sizes of the first storage region 111 and the second storage region 112 are equal to each other or not (in other words, whether the sizes of the first storage region 121 and the second storage region 122 are equal to each other or not). Similarly, in the second embodiment, the request unit 414 may check, for example, whether the sizes acquired in steps S301 and S302 are mutually equal or not.

Alternatively, the second storage region 112 may be larger than the first storage region 111. Similarly, the virtual partition 603-2 may be larger than the virtual partition 603-1.

In the second embodiment, part of the information notified by the reception unit 424 to the request unit 414 in step S310 is notified from the request unit 414 to the reception unit 424 in step S501. That is, in the second embodiment, somewhat redundant communication is carried out. However, depending on the embodiment, the information which has already been notified by the reception unit 424 to the request unit 414 in step S310 is not required to be transmitted in step S501.

Moreover, in the second embodiment, the request unit 414 calculates the starting position in steps S311 to S312. However, depending on the embodiment, the request unit 414 may notify the two addresses, which have been acquired in steps S301 and S302, respectively, to the reception unit 424, and the reception unit 424 may carry out calculations similar to those of steps S311 to S312.

## Claims

1. A backup control program (103) comprising a plurality of executable instructions, which, when executed on a computer (100, 400, 500), cause the computer to execute a backup control process comprising:
issuing (S102, S203) a stop instruction in accordance with a first program module (104, 412-414) included in the backup control program and executed in a first environment (101, 410) on the computer, the stop instruction being for causing a process of a data utilization program (106, 411) operating on the first environment (101, 410) and utilizing a first storage region (111, 121, 603-1) storing data targeted for backup to temporarily stop an updating operation with respect to the first storage region;
notifying (S105, S303) first virtual identification information and second virtual identification information to a process of a second program module (105, 423-425) in accordance with the first program module (104, 412-414), the second program module being included in the backup control program and executed in a second environment (102, 420) which is an environment on the computer and from which each of at least one real storage device (120, 441, 442, 552-1-552-N) is recognizable, the first virtual identification information being for identifying, in at least one virtual storage device (110, 443, 444, 604-1, 604-2) recognized in the first environment (104, 410), the first storage region (111, 603-1), the second virtual identification information being for identifying, in the at least one virtual storage device, a second storage region (112, 122, 603-2) to which the data is to be backed up;
acquiring (S106, S304, S306, S308, S311) first real identification information in accordance with the second program module (105, 423-425) by using a correspondence relation between the at least one real storage device and the at least one virtual storage device and using the notified first virtual identification information, the first real identification information being for identifying, in the at least one real storage device, the first storage region (121, 603-1);
acquiring (S106, S305, S307, S309, S312) second real identification information in accordance with the second program module (105, 423-425) by using the correspondence relation and the notified second virtual identification information, the second real identification information being for identifying, in the at least one real storage device, the second storage region (122, 603-2); and
based on the acquired first real identification information and the acquired second real identification information, issuing (S107, S503) a backup instruction in accordance with the second program module (105, 423-425), the backup instruction being for backing up the data from the first storage region (111, 121, 603-1) to the second storage region (112, 122, 603-2).

2. The backup control program according to claim 1, wherein the backup control process further comprises:
receiving (S109, S504, S505) a response to the backup instruction from a control device (123, 551) in accordance with the second program module (105, 423-425), the control device controlling, among the at least one real storage device, a real storage device including the first storage region or the second storage region;
notifying (S110, S505) contents of the response to a process of the first program module (104, 412-414) in accordance with the second program module(105, 423-425); and
when the response indicates normal termination, issuing (S111, S506) a cancel instruction for canceling the stop instruction to the process of the data utilization program (106, 411) in accordance with the first program module (104, 412-414).

3. The backup control program according to claim 1 or 2, wherein
the notifying (S105, S303) the first virtual identification information and the second virtual identification information is carried out in accordance with a network protocol (S201, S204, 601).

4. The backup control program according to any one of claims 1 to 3, wherein
each of the at least one real storage device (552-1-552-N) is a disk;
the at least one virtual storage device includes at least first and second virtual storage devices (604-1, 604-2);
the first storage region (603-1) is a partition on the first virtual storage device; and
the second storage region (603-2) is a partition on the second virtual storage device.

5. The backup control program according to any one of claims 1 to 4, wherein
the first environment is a first virtual machine (410) that operates on a hypervisor;
the second environment is a second virtual machine (420) that operates on the hypervisor; and
access from the first virtual machine to the at least one real storage device is carried out via a device driver of the second virtual machine.

6. The backup control program according to any one of claims 1 to 4, wherein
the first environment is an environment built on the second environment or in the second environment; and
access from inside of the first environment to the at least one real storage device is carried out via an operating system that provides the second environment.

7. A backup control method executed by a computer (100, 400, 500), the backup control method comprising:
issuing (S102, S203) a stop instruction in accordance with a first control program (104, 412-414) operating in a first environment (101, 410) on the computer, the stop instruction being for causing a process of a data utilization program (106, 411) operating in the first environment and utilizing a first storage region (111, 121, 603-1) storing data targeted for backup to temporarily stop an updating operation with respect to the first storage region;
notifying (S105, S303) first virtual identification information and second virtual identification information to a process of a second control program (105, 423-425) in accordance with the first control program (104, 412-414), the second control program (105, 423-425) operating in a second environment (102, 420) which is an environment on the computer and from which each of at least one real storage device (120, 441, 442, 552-1-552-N) is recognizable, the first virtual identification information being for identifying, in at least one virtual storage device (110, 443, 444, 604-1, 604-2) recognized in the first environment, the first storage region (111, 603-1), the second virtual identification information being for identifying, in the at least one virtual storage device, a second storage region (112, 122, 603-2) to which the data is to be backed up;
acquiring (S106, S304, S306, S308, S311) first real identification information in accordance with the second control program (105, 423-425) by using a correspondence relation between the at least one real storage device and the at least one virtual storage device and using the notified first virtual identification information, the first real identification information being for identifying, in the at least one real storage device, the first storage region;
acquiring (S106, S305, S307, S309, S312) second real identification information in accordance with the second control program (105, 423-425) by using the correspondence relation and the notified second virtual identification information, the second real identification information being for identifying, in the at least one real storage device, the second storage region; and
based on the acquired first real identification information and the acquired second real identification information, issuing (S107, S503) a backup instruction in accordance with the second control program (105, 423-425), the backup instruction being for backing up the data from the first storage region (111, 121, 603-1) to the second storage region(112, 122, 603-2).

8. An information processing device (100, 400, 500) in which a first environment (101, 410) is built and a second environment (102, 420) from which each of at least one real storage device (120, 441, 442, 552-1-552-N) is recognizable is built, the information processing device comprising:
a stop-instruction issuing unit (104, 413, 501) adapted to issue (S102, S203) a stop instruction from inside of the first environment (101, 410) to a process of a data utilization program (106, 411) operating on the first environment (101, 410) and utilizing a first storage region (111, 121, 603-1) storing data targeted for backup, the stop instruction being for causing the process of the data utilization program to temporarily stop an updating operation with respect to the first storage region;
a notification unit (104, 414, 501) adapted to issue a notification (S105, S303) about first virtual identification information and second virtual identification information from the inside of the first environment (101, 410), the first virtual identification information being for identifying, in at least one virtual storage device (110, 443, 444, 604-1, 604-2) recognized in the first environment (101, 410), the first storage region (111, 603-1), the second virtual identification information being for identifying, in the at least one virtual storage device, a second storage region (112, 122, 603-2) to which the data is to be backed up;
an acquisition unit (105, 424, 501) adapted to receive (S105, S303) the notification in the second environment (102, 420), to acquire (S106, S304, S306, S308, S311) first real identification information by using a correspondence relation between the at least one real storage device and the at least one virtual storage device and using the notified first virtual identification information, and to acquire (S106, S305, S307, S309, S312) second real identification information by using the correspondence relation and the notified second virtual identification information, the first real identification information being for identifying, in the at least one real storage device, the first storage region (121, 603-1), the second real identification information being for identifying, in the at least one real storage device, the second storage region (122, 603-2); and
a backup-instruction issuing unit (105, 424-425, 501, 507) adapted to issue (S107, S503), based on the acquired first real identification information and the acquired second real identification information, a backup instruction from inside of the second environment (102, 420), the backup instruction being for backing up the data from the first storage region (111, 121, 603-1) to the second storage region (112, 122, 603-2).

## Patentansprüche

1. Backup-Steuerprogramm (103), umfassend eine Mehrzahl von ausführbaren Befehlen, welche, wenn auf einem Computer (100, 400, 500) ausgeführt, den Computer veranlassen, einen Backup-Steuerprozess auszuführen, der umfasst:
Ausgeben (S102, S203) eines Stoppbefehls gemäß einem ersten Programmmodul (104, 412 - 414), das im Backup-Steuerprogramm enthalten ist und in einer ersten Umgebung (101, 410) auf dem Computer ausgeführt wird, wobei der Stoppbefehl zum Veranlassen eines Prozesses eines Datenverwendungsprogramms (106, 411), das auf der ersten Umgebung (101, 410) funktioniert und einen ersten Speicherbereich (111, 121, 603-1) verwendet, der zum Backup vorherbestimmte Daten speichert, ist, einen Aktualisierungsvorgang in Bezug auf den ersten Speicherbereich vorübergehend zu stoppen;
Melden (S105, S303) von ersten virtuellen Identifikationsinformationen und zweiten virtuellen Identifikationsinformationen an einen Prozess eines zweiten Programmmoduls (105, 423 - 425) gemäß dem ersten Programmmodul (104, 412 - 414), wobei das zweite Programmmodul im Backup-Steuerprogramm enthalten ist und in einer zweiten Umgebung (102, 420) ausgeführt wird, welche eine Umgebung auf dem Computer ist und von welcher jeweils mindestens eine reale Speichervorrichtung (120, 441, 442, 552-1 - 552-N) erkennbar ist, wobei die ersten virtuellen Identifikationsinformationen zum Identifizieren in mindestens einer virtuellen Speichervorrichtung (110, 443, 444, 604-1, 604-2), die in der ersten Umgebung (104, 410) erkannt wird, des ersten Speicherbereichs (111, 603-1) sind, die zweiten virtuellen Identifikationsinformationen zum Identifizieren in der mindestens einen virtuellen Speichervorrichtung eines zweiten Speicherbereichs (112, 122, 603-2) sind, in dem die Daten gesichert werden sollen;
Beschaffen (S106, S304, S306, S308, S311) von ersten realen Identifikationsinformationen gemäß dem zweiten Programmmodul (105, 423 - 425) durch Verwenden einer Entsprechungsbeziehung zwischen der mindestens einen realen Speichervorrichtung und der mindestens einen virtuellen Speichervorrichtung und Verwenden der gemeldeten ersten virtuellen Identifikationsinformationen, wobei die ersten realen Identifikationsinformationen zum Identifizieren in der mindestens einen realen Speichervorrichtung des ersten Speicherbereichs (121, 603-1) sind;
Beschaffen (S106, S305, S307, S309, S312) von zweiten realen Identifikationsinformationen gemäß dem zweiten Programmmodul (105, 423 - 425) durch Verwenden der Entsprechungsbeziehung und Verwenden der gemeldeten zweiten virtuellen Identifikationsinformationen, wobei die zweiten realen Identifikationsinformationen zum Identifizieren in der mindestens einen realen Speichervorrichtung des zweiten Speicherbereichs (122, 603-2) sind;
Ausgeben (S107, S503) basierend auf den beschafften ersten realen Identifikationsinformationen und den beschafften zweiten realen Identifikationsinformationen eines Backup-Befehls gemäß dem zweiten Programmmodul (105, 423 - 425), wobei der Backup-Befehl zum Sichern der Daten aus dem ersten Speicherbereich (111, 121, 603-1) im zweiten Speicherbereich (112, 122, 603-2) ist.

2. Backup-Steuerprogramm nach Anspruch 1, wobei der Backup-Steuerprozess ferner umfasst:
Empfangen (S109, S504, S505) einer Antwort auf den Backup-Befehl von einer Steuervorrichtung (123, 551) gemäß dem zweiten Programmmodul (105, 423 - 425), wobei die Steuervorrichtung unter der mindestens einen realen Speichervorrichtung eine reale Speichervorrichtung speichert, die den ersten Speicherbereich oder den zweiten Speicherbereich umfasst;
Melden (S110, S505) von Inhalten der Antwort an einen Prozess des ersten Programmmoduls (104, 412 - 414) gemäß dem zweiten Programmmodul (105, 423 - 425); und
Ausgeben (S111, S506), wenn die Antwort einen normalen Abschluss anzeigt, eines Aufhebungsbefehls zum Aufheben des Stoppbefehls für den Prozess des Datenverwendungsprogramms (106, 411) gemäß dem ersten Programmmodul (104, 412 - 414).

3. Backup-Steuerprogramm nach Anspruch 1 oder 2, wobei
das Melden (S105, S303) der ersten virtuellen Identifikationsinformationen und der zweiten Identifikationsinformationen gemäß einem Netzprotokoll (S201, S204, 601) ausgeführt wird.

4. Backup-Steuerprogramm nach einem der Ansprüche 1 bis 3, wobei
jede der mindestens einen realen Speichervorrichtung (552-1 - 552-N) eine Platte ist;
die mindestens eine virtuelle Speichervorrichtung mindestens erste und zweite virtuelle Speichervorrichtungen (604-1, 604-2) umfasst;
der erste Speicherbereich (603-1) eine Partition auf der ersten virtuellen Speichervorrichtung ist; und
der zweite Speicherbereich (603-2) eine Partition auf der zweiten virtuellen Speichervorrichtung ist.

5. Backup-Steuerprogramm nach einem der Ansprüche 1 bis 4, wobei
die erste Umgebung eine erste virtuelle Maschine (410) ist, die auf einem Hypervisor arbeitet;
die zweite Umgebung eine zweite virtuelle Maschine (420) ist, die auf dem Hypervisor arbeitet; und
Zugriff von der ersten virtuellen Maschine auf die mindestens eine reale Speichervorrichtung über einen Vorrichtungstreiber der zweiten virtuellen Maschine erfolgt.

6. Backup-Steuerprogramm nach einem der Ansprüche 1 bis 4, wobei
die erste Umgebung eine Umgebung ist, die auf der zweiten Umgebung oder in der zweiten Umgebung gebildet ist; und
Zugriff von innerhalb der ersten Umgebung auf die mindestens eine reale Speichervorrichtung über ein Betriebssystem erfolgt, das die zweite Umgebung bereitstellt.

7. Backup-Steuerverfahren, das von einem Computer (100, 400, 500) ausgeführt wird, wobei das Backup-Steuerverfahren umfasst:
Ausgeben (S102, S203) eines Stoppbefehls gemäß einem ersten Steuerprogramm (104, 412 - 414), das in einer ersten Umgebung (101, 410) auf dem Computer funktioniert, wobei der Stoppbefehl zum Veranlassen eines Prozesses eines Datenverwendungsprogramms (106, 411), das in der ersten Umgebung funktioniert und einen ersten Speicherbereich (111, 121, 603-1) verwendet, der zum Backup vorherbestimmte Daten speichert, ist, einen Aktualisierungsvorgang in Bezug auf den ersten Speicherbereich vorübergehend zu stoppen;
Melden (S105, S303) von ersten virtuellen Identifikationsinformationen und zweiten virtuellen Identifikationsinformationen an einen Prozess eines zweiten Steuerprogramms (105, 423 - 425) gemäß dem ersten Steuerprogramm (104, 412 - 414), wobei das zweite Steuerprogramm (105, 423 - 425) in einer zweiten Umgebung (102, 420) funktioniert, welche eine Umgebung auf dem Computer ist und von welcher jeweils mindestens eine reale Speichervorrichtung (120, 441, 442, 552-1 - 552-N) erkennbar ist, wobei die ersten virtuellen Identifikationsinformationen zum Identifizieren in mindestens einer virtuellen Speichervorrichtung (110, 443, 444, 604-1, 604-2), die in der ersten Umgebung erkannt wird, des ersten Speicherbereichs (111, 603-1) sind, und die zweiten virtuellen Identifikationsinformationen zum Identifizieren in der mindestens einen virtuellen Speichervorrichtung eines zweiten Speicherbereichs (112, 122, 603-2) sind, in dem die Daten gesichert werden sollen;
Beschaffen (S106, S304, S306, S308, S311) von ersten realen Identifikationsinformationen gemäß dem zweiten Steuerprogramm (105, 423 - 425) durch Verwenden einer Entsprechungsbeziehung zwischen der mindestens einen realen Speichervorrichtung und der mindestens einen virtuellen Speichervorrichtung und Verwenden der gemeldeten ersten virtuellen Identifikationsinformationen, wobei die ersten realen Identifikationsinformationen zum Identifizieren in der mindestens einen realen Speichervorrichtung des ersten Speicherbereichs sind;
Beschaffen (S106, S305, S307, S309, S312) von zweiten realen Identifikationsinformationen gemäß dem zweiten Steuerprogramm (105, 423 - 425) durch Verwenden der Entsprechungsbeziehung und Verwenden der gemeldeten zweiten virtuellen Identifikationsinformationen, wobei die zweiten realen Identifikationsinformationen zum Identifizieren in der mindestens einen realen Speichervorrichtung des zweiten Speicherbereichs sind;
Ausgeben (S107, S503) basierend auf den beschafften ersten realen Identifikationsinformationen und den beschafften zweiten realen Identifikationsinformationen eines Backup-Befehls gemäß dem zweiten Steuerprogramm (105, 423 - 425), wobei der Backup-Befehl zum Sichern der Daten aus dem ersten Speicherbereich (111, 121, 603-1) im zweiten Speicherbereich (112, 122, 603-2) ist.

8. Informationsverarbeitungsvorrichtung (100, 400, 500), in welcher eine erste Umgebung (101, 410) gebildet ist und eine zweite Umgebung (102, 420) gebildet ist, von welcher mindestens eine reale Speichervorrichtung (120, 441, 442, 552-1 - 552-N) erkennbar ist, wobei die Informationsverarbeitungsvorrichtung umfasst:
eine Stoppbefehlsausgabeeinheit (104, 413, 501), die so ausgelegt ist, dass sie einen Stoppbefehl innerhalb der ersten Umgebung (101, 410) an einen Prozess eines Datenverwendungsprogramms (106, 411) ausgibt (S102, S203), das auf der ersten Umgebung (101, 410) funktioniert und einen ersten Speicherbereich (111, 121, 603-1) verwendet, der zum Backup vorherbestimmte Daten speichert, wobei der Stoppbefehl zum Veranlassen des Prozesses des Datenverwendungsprogramms ist, einen Aktualisierungsvorgang in Bezug auf den ersten Speicherbereich vorübergehend zu stoppen;
eine Meldeeinheit (104, 414, 501), die so ausgelegt ist, dass sie eine Meldung über erste virtuelle Identifikationsinformationen und zweite virtuelle Identifikationsinformationen von innerhalb der ersten Umgebung (101, 410) ausgibt (S105, S303), wobei die ersten virtuellen Identifikationsinformationen zum Identifizieren in mindestens einer virtuellen Speichervorrichtung (110, 443, 444, 604-1, 604-2), die in der ersten Umgebung (101, 410) erkannt wird, des ersten Speicherbereichs (111, 603-1) sind, und die zweiten virtuellen Identifikationsinformationen zum Identifizieren in der mindestens einen virtuellen Speichervorrichtung eines zweiten Speicherbereichs (112, 122, 603-2) sind, in dem die Daten gesichert werden sollen;
eine Beschaffungseinheit (105, 424, 501), die so ausgelegt ist, dass sie die Meldung in der zweiten Umgebung (102, 420) empfängt (S105, S303), erste reale Identifikationsinformationen durch Verwenden einer Entsprechungsbeziehung zwischen der mindestens einen realen Speichervorrichtung und der mindestens einen virtuellen Speicherborrichtung und Verwenden der gemeldeten ersten virtuellen Identifikationsinformationen beschafft (S106, S304, S306, S308, S311), und zweite reale Identifikationsinformationen durch Verwenden der Entsprechungsbeziehung und der gemeldeten zweiten virtuellen Identifikationsinformationen beschafft (S106, S305, S307, S309, S312), wobei die ersten realen Identifikationsinformationen zum Identifizieren in der mindestens einen realen Speichervorrichtung des ersten Speicherbereichs (121, 603-1) sind, und die zweiten realen Identifikationsinformationen zum Identifizieren in der mindestens einen realen Speichervorrichtung des zweiten Speicherbereichs (122, 603-2) sind; und
eine Backup-Befehlsausgabeeinheit (S105, 424-425, 501, 507), die so ausgelegt ist, dass sie basierend auf den beschafften ersten realen Identifikationsinformationen und den beschafften zweiten realen Identifikationsinformationen einen Backup-Befehl von innerhalb der zweiten Umgebung (102, 420) ausgibt (S107, S503), wobei der Backup-Befehl zum Sichern der Daten aus dem ersten Speicherbereich (111, 121, 603-1) im zweiten Speicherbereich (112, 122, 603-2) ist.

## Revendications

1. Programme de commande de sauvegarde (103) comportant une pluralité d'instructions exécutables, qui, lorsqu'elles sont exécutées sur un ordinateur (100, 400, 500) amènent l'ordinateur à exécuter un processus de commande de sauvegarde comportant :
l'émission (S102, S203) d'une instruction d'arrêt conformément à un premier module de programme (104, 412-414) inclus dans le programme de commande de sauvegarde et exécuté dans un premier environnement (101, 410) sur l'ordinateur, l'instruction d'arrêt étant prévue pour amener un processus de programme d'utilisation de données (106, 411) fonctionnant sur le premier environnement (101, 410) et utilisant une première région de stockage (111, 121, 603-1) mémorisant des données ciblées pour une sauvegarde afin d'arrêter temporairement une opération de mise à jour concernant la première région de stockage ;
la notification (S105, S303) d'une première information d'identification virtuelle et d'une seconde information d'identification virtuelle à un processus d'un second module de programme (105, 423-425) conformément au premier module de programme (104, 412-414), le second module de programme étant inclus dans le programme de commande de sauvegarde et exécuté dans un second environnement (102, 420) qui est un environnement sur l'ordinateur et à partir duquel chacun d'au moins un dispositif de stockage réel (120, 441, 442, 552-1-552-N) est reconnaissable, la première information d'identification virtuelle étant prévue pour identifier, dans au moins un dispositif de stockage virtuel (110, 443, 444, 604-1, 604-2) reconnu dans le premier environnement (104, 410), la première région de stockage (111, 603-1), la seconde information d'identification virtuelle étant prévue pour identifier, dans le au moins un dispositif de stockage virtuel, une seconde région de stockage (112, 122, 603-2) dans laquelle les données doivent être sauvegardées ;
l'acquisition (S106, S304, S306, S308, S311) d'une première information d'identification réelle conformément au second module de programme (105, 423-425) en utilisant une relation de correspondance entre le au moins un dispositif de stockage réel et le au moins un dispositif de stockage virtuel et en utilisant la première information d'identification virtuelle notifiée, la première information d'identification réelle étant prévue pour identifier, dans le au moins un dispositif de stockage réel, la première région de stockage (121, 603-1) ;
l'acquisition (S106, S305, S307, S309, S312) d'une seconde information d'identification réelle conformément au second module de programme (105, 423-425) en utilisant la relation de correspondance et la seconde information d'identification virtuelle notifiée, la seconde information d'identification réelle étant prévue pour identifier, dans le au moins un dispositif de stockage réel, la seconde région de stockage (122, 603-2) ; et
en fonction de la première information d'identification réelle acquise et de la seconde information d'identification réelle acquise, l'émission (S107, S503) d'une instruction de sauvegarde conformément au second module de programme (105, 423-425), l'instruction de sauvegarde étant prévue pour sauvegarder les données à partir de la première région de stockage (111, 121, 603-1) dans la seconde région de stockage (112, 122, 603-2).

2. Programme de commande de sauvegarde selon la revendication 1, dans lequel le processus de commande de sauvegarde comporte en outre :
la réception (S109, S504, S505) d'une réponse à l'instruction de sauvegarde provenant d'un dispositif de commande (123, 551) conformément au second module de programme (105, 423-425), le dispositif de commande contrôlant, parmi le au moins un dispositif de stockage réel, un dispositif de stockage réel comprenant la première région de stockage ou la seconde région de stockage ;
la notification (S110, S505) des contenus de la réponse à un processus du premier module de programme (104, 412-414) conformément au second module de programme (105, 423-425) ; et
lorsque la réponse indique un achèvement normal, l'émission (S111, S506) d'une instruction d'annulation pour annuler l'instruction d'arrêt au processus du programme d'utilisation de données (106, 411) conformément au premier module de programme (104, 412-414).

3. Programme de commande de sauvegarde selon la revendication 1 ou 2, dans lequel
la notification (S105, S303) de la première information d'identification virtuelle et de la seconde information d'identification virtuelle est effectuée conformément à un protocole de réseau (S201, S204, 601).

4. Programme de commande de sauvegarde selon l'une quelconque des revendications 1 à 3, dans lequel
chacun du au moins un dispositif de stockage réel (552-1-552-N) est un disque ;
le au moins un dispositif de stockage virtuel comprend au moins des premiers et seconds dispositifs de stockage virtuel (604-1, 604-2) ;
la première région de stockage (603-1) est une partition sur le premier dispositif de stockage virtuel ; et
la seconde région de stockage (603-2) est une partition sur le second dispositif de stockage virtuel.

5. Programme de commande de sauvegarde selon l'une quelconque des revendications 1 à 4, dans lequel
le premier environnement est une première machine virtuelle (410) qui fonctionne sur un hyperviseur ;
le second environnement est une seconde machine virtuelle (420) qui fonctionne sur le hyperviseur ; et
un accès de la première machine virtuelle au au moins un dispositif de stockage réel est effectué par l'intermédiaire d'un pilote de dispositif de la seconde machine virtuelle.

6. Programme de commande de sauvegarde selon l'une quelconque des revendications 1 à 4, dans lequel
le premier environnement est un environnement construit sur le second environnement ou dans le second environnement ; et
un accès de l'intérieur du premier environnement au au moins un dispositif de stockage réel est effectué par l'intermédiaire d'un système d'exploitation qui fournit le second environnement.

7. Procédé de commande de sauvegarde exécuté par un ordinateur (100, 400, 500), le procédé de commande de sauvegarde comportant :
l'émission (S102, S203) d'une instruction d'arrêt conformément au premier programme de commande (104, 412-414) fonctionnant dans un premier environnement (101, 410) sur l'ordinateur, l'instruction d'arrêt étant prévue pour amener un processus d'un programme d'utilisation de données (106, 411) fonctionnant dans le premier environnement et utilisant une première région de stockage (111, 121, 603-1) mémorisant des données ciblées pour une sauvegarde afin d'arrêter temporairement une opération de mise à jour concernant la première région de stockage ;
la notification (S105, S303) d'une première information d'identification virtuelle et d'une seconde information d'identification virtuelle à un processus d'un second programme de commande (105, 423-425) conformément au premier programme de commande (104, 412-414), le second programme de commande (105, 423-425) fonctionnant dans un second environnement (102, 420) qui est un environnement sur l'ordinateur et à partir duquel chacun d'au moins un dispositif de stockage réel (120, 441, 442, 552-1-552-N) est reconnaissable, la première information d'identification étant prévue pour identifier, dans au moins un dispositif de stockage virtuel (110, 443, 444, 604-1, 604-2) reconnu dans le premier environnement, la première région de stockage (111, 603-1), la seconde information d'identification virtuelle étant prévue pour identifier, dans le au moins un dispositif de stockage virtuel, une seconde région de stockage (112, 122, 603-2) dans laquelle les données doivent être sauvegardées ;
l'acquisition (S106, S304, S306, S308, S311) d'une première information d'identification réelle conformément au second programme de commande (105, 423-425) en utilisant une relation de correspondance entre le au moins un dispositif de stockage réel et le au moins un dispositif de stockage virtuel et en utilisant la première information d'identification virtuelle notifiée, la première information d'identification réelle étant prévue pour identifier, dans le au moins un dispositif de stockage réel, la première région de stockage ;
l'acquisition (S106, S305, S307, S309, S312) d'une seconde information d'identification réelle conformément au second programme de commande (105, 423-425) en utilisant la relation de correspondance et la seconde information d'identification virtuelle notifiée, la seconde information d'identification réelle étant prévue pour identifier, dans le au moins un dispositif de stockage réel, la seconde région de stockage ; et
en fonction de la première information d'identification réelle acquise et de la seconde information d'identification réelle acquise, l'émission (S107, S503) d'une instruction de sauvegarde conformément au second programme de commande (105, 423-425), l'instruction de sauvegarde étant prévue pour sauvegarder les données de la première région de stockage (111, 121, 603-1) à la seconde région de stockage (112, 122, 603-2).

8. Dispositif de traitement d'informations (100, 400, 500) dans lequel un premier environnement (101, 410) est construit et un second environnement (102, 420) à partir duquel chacun d'au moins un dispositif de stockage réel (120, 441, 442, 552-1-552-N) est reconnaissable est construit, le dispositif de traitement d'informations comportant :
une unité d'émission d'instruction d'arrêt (104, 413, 501) adaptée pour émettre (S102, S203) une instruction d'arrêt de l'intérieur du premier environnement (101, 410) à un processus d'un programme d'utilisation de données (106, 411) fonctionnant sur le premier environnement (101, 410) et utilisant une première région de stockage (111, 121, 603-1) mémorisant des données ciblées pour une sauvegarde, l'instruction d'arrêt étant prévue pour amener le processus de programme d'utilisation de données à arrêter temporairement une opération de mise à jour concernant la première région de stockage ;
une unité de notification (104, 414, 501) adaptée pour émettre une notification (S105, S303) concernant une première information d'identification virtuelle et une seconde information d'identification virtuelle depuis l'intérieur du premier environnement (101, 410), la première information d'identification virtuelle étant prévue pour identifier, dans au moins un dispositif de stockage virtuel (110, 433, 444, 604-1, 604-2) reconnu dans le premier environnement (101, 410), la première région de stockage (111, 603-1), la seconde information d'identification virtuelle étant prévue pour identifier, dans le au moins un dispositif de stockage virtuel, une seconde région de stockage (112, 122, 603-2) dans laquelle les données doivent être sauvegardées ;
une unité d'acquisition (105, 424, 501) adaptée pour recevoir (S105, S303) la notification dans le second environnement (102, 420), pour acquérir (S106, S304, S306, S308, S311) une première information d'identification réelle en utilisant une relation de correspondance entre le au moins un dispositif de stockage réel et le au moins un dispositif de stockage virtuel et en utilisant la première information d'identification virtuelle notifiée, et pour acquérir (S106, S305, S307, S309, S312) d'une seconde information d'identification réelle en utilisant la relation de correspondance et la seconde information d'identification virtuelle notifiée, la première information d'identification réelle étant prévue pour identifier, dans le au moins un dispositif de stockage réel, la première région de stockage (121, 603-1), la seconde information d'identification réelle étant prévue pour identifier, dans le au moins un dispositif de stockage réel, la seconde région de stockage (122, 603-2); et
une unité d'émission d'instruction de sauvegarde (105, 424-425, 501, 507) adaptée pour émettre (S107, S503), en fonction de la première information d'identification réelle acquise et de la seconde information d'identification réelle acquise, une instruction de sauvegarde depuis l'intérieur du second environnement (102, 420), l'instruction de sauvegarde étant prévue pour sauvegarder les données de la première région de stockage (111, 121, 603-1) à la seconde région de stockage (112, 122, 603-2).
